(19) Europäisches Patentamt
European Patent Office
Office européen des brevets

(11) **EP 4 763 747 A1**

(12) **DEMANDE DE BREVET EUROPEEN**

(43) Date de publication:
**24.06.2026 Bulletin 2026/26**

(51) Classification Internationale des Brevets (IPC):
**B65G 1/04** (2006.01)   **B65G 1/10** (2006.01)

(21) Numéro de dépôt: **25221400.2**

(52) Classification Coopérative des Brevets (CPC):
**B65G 1/0407; B65G 1/10**

(22) Date de dépôt: **08.12.2025**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **20.12.2024 FR 2414822**

(71) Demandeur: **Exotec Product France**
**59170 Croix (FR)**

(72) Inventeurs:
• **MOULIN, Romain**
**59800 LILLE (FR)**
• **HEITZ, Renaud**
**59650 VILLENEUVE D'ASCQ (FR)**

(74) Mandataire: **Plasseraud IP**
**104 Rue de Richelieu**
**CS92104**
**75080 Paris Cedex 02 (FR)**

(54) **INSTALLATION DE STOCKAGE ET DE RETRAIT ET PROCÉDÉ DE MISE EN ŒUVRE**

(57)    Installation de stockage et de retrait (1) pour unités de stockage (U) comprenant :
/a/ une pluralité de racks de stockage (2), espacés les uns par rapport aux autres en formant des allées (3),
/b/ au moins un emplacement de transit (ET) agencé sous au moins l'un des racks de stockage (2),
/c/ au moins un premier véhicule (V1) configuré pour circuler dans les allées (3), configuré pour transporter une unité de stockage (U) entre un emplacement de stockage en hauteur et ledit au moins un emplacement de transit (ET),
/d/ au moins un deuxième véhicule (V2) configuré pour transporter une unité de stockage (U) entre ledit au moins un emplacement de transit (ET) et au moins un emplacement extérieur aux racks de stockage,
/e/ au moins un passage libre (PL), adjacent audit emplacement de transit (ET), configuré pour permettre la circulation dudit au moins un deuxième véhicule (V2) selon une voie de circulation transversale aux allées (3).

[Fig. 1]

FIG. 1

EP 4 763 747 A1

## Description

La présente divulgation est relative à une installation de stockage et de retrait pour des unités de stockage, ainsi qu'à un procédé de stockage et de retrait mis en œuvre par ladite installation.

La présente divulgation trouve une application particulière lorsque les unités de stockage comprennent une palette destinée à recevoir un contenu palettisé. Le contenu peut comprendre des objets à savoir des articles ou emballages tels que des cartons qui sont regroupés sur la palette. Les objets sont typiquement maintenus sur la palette au moyen d'un film étirable. Le film étirable est déroulé en tension autour du contenu, typiquement sur toute la hauteur du contenu, e t de sorte à maintenir l'ensemble des objets sur la palette, prisonniers d'une enveloppe formée par le film étirable enroulé autour du contenu.

De manière générale, les palettes peuvent être au format 1200 par 1000 (longueur et largeur en millimètres) par exemple une palette ISO, ou tout autre format connu de l'homme du métier tel que 1200 par 800 pour une palette au format euro.

Dans un tel cas, l'installation de stockage et de retrait permettra d'automatiser le stockage et le retrait des palettes, et plus généralement des contenus palettisés qui peuvent typiquement présenter une charge supérieure à 100 kg, par exemple comprise entre 100kg et 1000kg, voire plus.

La présente divulgation n'est toutefois pas limitée au domaine des palettes, et peut trouver une application particulière pour le stockage et le retrait de conteneurs, typiquement standard convenant pour la mise en oeuvre de préparation de commande, au niveau d'une ou plusieurs stations de préparation de commande de ladite installation.

## Domaine technique

La présente divulgation relève du domaine des systèmes de stockage et de retrait automatisés, comprenant typiquement des racks de stockage à l'intérieur desquels peuvent être stockés et retirés des contenus palettisés.

Un premier état de la technique connait les transstockeurs, qui se déplacent suivant la longueur des allées entre les racks de stockage. Ces transstockeurs représentent une solution lourde nécessitant l'installation de rails de guidage du transstockeur au plafond et au sol, pour le guidage d'un mât. Il s'agit d'une solution difficile à mettre en oeuvre et couteuse, et de capacité limitée.

Un perfectionnement d'un tel état de la technique est décrit dans le document WO2023/159401. Le système de stockage et de retrait automatisé y comprend deux types de véhicules :

- un premier véhicule semblable à un transstockeur, guidé dans une allée entre deux racks de stockage par des rails agencés en haut et en bas des deux racks. Ce premier véhicule est configuré pour transférer un contenu palettisé entre un emplacement en hauteur dans un rack et un deuxième véhicule, stationné en dehors de l'allée, et

- un deuxième véhicule à guidage automatisé qui se déplace en dehors de l'allée, configuré pour transporter le contenu palettisé reçu du premier véhicule.

Le premier véhicule comprend notamment deux mâts et une fourche déplaçable verticalement en hauteur entre les mâts, la fourche étant en outre configurée pour transférer un contenu palettisé entre le premier véhicule et un des emplacements de stockage. Le deuxième véhicule comprend notamment des rainures configurées pour recevoir la fourche du premier véhicule, permettant ainsi le transfert du contenu palettisé entre le premier véhicule et le deuxième véhicule.

Comme les transstockeurs classiques, cette solution reste coûteuse et difficile à mettre en œuvre.

Un deuxième état de la technique, illustré par exemple par le document US 2016/0090283 A1 connait des véhicules à guidage automatisé qui comprennent un système de déplacement horizontal, et un système de transfert, typiquement une fourche télescopique, déplaçable en hauteur, pour s'aligner avec un emplacement de stockage.

De tels véhicules se déplacent dans les allées, et sont configurés pour transférer une charge tels qu'un contenu palettisé entre un emplacement de stockage du rack et le véhicule.

Un tel véhicule peut être utilisé pour retirer un contenu palettisé, puis est déplacé en sortie le long de l'allée pour acheminer le contenu jusqu'à un endroit désiré hors de racks de stockage. Une telle solution employant un même type de véhicule est lente pour les raisons suivantes :

- de tels véhicules évoluent typiquement au milieu des hommes, ce qui requiert de limiter leur vitesse de déplacement selon les normes de sécurité typiquement en vigueur,
- le déplacement du véhicule le long de l'allée jusqu'à la sortie du véhicule prend du temps,
- un temps supplémentaire est requis après la sortie du véhicule si le véhicule doit déposer le contenu palettisé sur un dispositif de dépose, distant des racks de stockage.

Une troisième solution d'installation comprend des navettes (en anglais « *shuttles* ») circulant respectivement suivant plusieurs niveaux de hauteur le long des allées entre deux racks de stockage, chaque navette guidée par des rails horizontaux solidaires des deux racks de stockage, et qui permette d'extraire une unité de stockage d'un emplacement de stockage et de transport en bout d'allée pour son transfert sur un dispositif descenseur, assurant son acheminant vertical jusqu'à un ou plusieurs convoyeurs.

Le document US 2017/0101264 illustre une variante d'installation d'un tel état de la technique. Dans ce document, l'installation comprend à chaque niveau de hauteur, des rangées agencées transversalement aux allées. Des navettes d'allées déplacent les contenus palettisés le long des allées vers et depuis des ascenseurs et des navettes de rangées déplacent les contenus palettisés depuis les navettes d'allées le long des rangées. Il s'agit toutefois d'une solution couteuse, et non adaptée à atteindre des capacités de traitement élevées.

Plus récemment, un quatrième état de la technique, divulgué par le document WO2024/091954 A1, connaît un système de stockage et de récupération automatisé conçu pour une navigation d'un véhicule à guidage automatique dans un environnement tridimensionnel. Le système comprend une installation de stockage multiniveaux avec des cellules cuboïdes et un véhicule à guidage automatique pouvant supporter un contenu palettisé et se déplacer verticalement et horizontalement.

Une telle solution nécessite des installations de stockage spécifiques portant les éléments de grimpe, ce qui grève leur cout. Un autre défaut d'une telle solution est l'impossibilité d'employer des moteurs à haute puissance, ce qui oblige à limiter la vitesse de déplacement vertical, en particulier lorsque la charge devient importante, et telle que rencontrée pour les contenus palettisés.

Selon les constatations des inventeurs, un tel état de la technique peut être amélioré, en particulier s'agissant de la gestion des flux logistiques, et des capacités de l'installation.

**Résumé**

La présente divulgation vient améliorer la situation.

Selon un **premier aspect,** il est proposé une installation de stockage et de retrait pour unités de stockage comprenant :

- /a/ une pluralité de racks de stockage, espacés les uns par rapport aux autres en formant des allées, chaque rack de stockage comprenant une pluralité d'emplacements de stockage superposés pour le soutien des unités de stockage, en hauteur par rapport à une surface horizontale, telle que le sol,
- /b/ au moins un emplacement de transit (en particulier un ou plusieurs emplacements de transit), agencé sous au moins l'un des racks de stockage pour recevoir temporairement une unité de stockage,
- /c/ au moins un premier véhicule configuré pour circuler dans les allées et transporter une unité de stockage entre un emplacement de stockage en hauteur et ledit au moins un emplacement de transit,
- /d/ au moins un deuxième véhicule configuré pour transporter une unité de stockage entre ledit au moins un emplacement de transit et au moins un emplacement externe aux racks de stockage,
- /e/ au moins un passage libre sous lesdits racks de stockage, adjacent audit emplacement de transit, configuré pour permettre la circulation dudit au moins un deuxième véhicule selon une voie de circulation transversale aux allées.

Les emplacements de transit, et les passages libres peuvent être agencés suivant la longueur du rack de stockage en alternance de sorte qu'au moins un passage libre soit associé adjacent, latéralement à chaque emplacement de transit.

Les caractéristiques exposées dans les paragraphes suivants peuvent, optionnellement, être mises en oeuvre pour l'installation selon le premier aspect, indépendamment les unes des autres ou en combinaison les unes avec les autres :

Selon une possibilité, le premier véhicule est configuré pour transporter ladite unité de stockage entre ledit emplacement de stockage en hauteur et jusqu'à en appui sur une surface supérieure d'au moins un deuxième véhicule stationné sur l'emplacement de transit ;

Selon une autre possibilité, ledit emplacement de transit peut comprendre un système mécanique de stockage configuré pour soutenir temporairement une unité de stockage à distance de la surface horizontale, et dans lequel un déplacement longitudinal du deuxième véhicule depuis le passage libre jusqu'audit emplacement de transit adjacent assure une position d'insertion du deuxième véhicule sous ladite unité de stockage soutenue par le système mécanique de stockage ;

En particulier, ledit système de stockage mécanique peut comprendre un couple d'interfaces mécaniques comprenant une première interface mécanique et une deuxième interface mécanique, parallèles entre elles, orientées longitudinalement chacune suivant la longueur du rack de stockage, et dans laquelle ledit deuxième véhicule est agencé entre la première interface et la deuxième interface dans la position d'insertion ;

Selon un mode de réalisation, le deuxième véhicule peut comprendre un système de levage comprenant un plateau configuré pour passer d'une position basse de manière à autoriser un positionnement du deuxième véhicule en dessous d'une unité de stockage en appui sur le système mécanique de stockage jusqu'à une position haute pour laquelle le plateau soulève l'unité de stockage et dégage ladite unité de stockage du système mécanique de stockage.

Selon un mode de réalisation, ladite installation peut comprendre les unités de stockage qui présentent, chacune une dimension en largeur, et une dimension en longueur supérieure à la dimension en largeur, et dans laquelle :

- les unités de stockage sont stockées dans les emplacements de stockage, longitudinalement, suivant une dimension en profondeur du rack de stockage, transversale au rack de stockage, et
- le premier véhicule est configuré pour transporter une des unités de stockage depuis un emplacement de stockage en hauteur et jusqu'à un emplacement de transit, sans changer l'orientation de ladite unité de stockage, en positionnant ladite unité de stockage sur l'emplacement de transit, orientée longitudinalement, suivant la direction transversale du rack de stockage.

Selon un mode de réalisation, ladite installation peut comprendre les unités de stockage qui présentent, chacune une dimension en largeur, et une dimension en longueur supérieure à la dimension en largeur, et dans laquelle :

- les unités de stockage sont stockées dans les emplacements de stockage, longitudinalement, suivant une dimension en profondeur du rack de stockage, transversale au rack de stockage, et
- le premier véhicule est configuré pour transporter une des unités de stockage depuis un emplacement de stockage en hauteur et jusqu'à un emplacement de transit, sans changer l'orientation de ladite unité de stockage, en positionnant ladite unité de stockage sur l'emplacement de transit, orientée longitudinalement, suivant la direction transversale du rack de stockage.

Selon un mode de réalisation, le ou chaque rack de stockage peut comprendre plusieurs colonnes réparties suivant la direction en longueur du rack de stockage, chaque colonne comprenant une pluralité d'emplacements de stockage superposés pour recevoir respectivement une pluralité d'unités de stockage, et dans laquelle le ou les deuxièmes véhicules comprennent une dimension en longueur inférieure ou égale à la dimension en profondeur du rack de stockage, et une dimension en largeur, inférieure à la longueur du deuxième véhicule, inférieure à la dimension longitudinale d'un emplacement de stockage.

Selon un mode de réalisation, la première interface mécanique et la deuxième interface mécanique peuvent être espacées, suivant la direction transversale au rack de stockage suivant un espacement supérieur à la dimension en longueur d'un deuxième véhicule.

Selon un mode de réalisation, tout ou partie des passages libres sont des passages doubles, adjacents à un même emplacement de transit, les passages doubles autorisant la circulation de deux deuxièmes véhicules, embarquant ou non chacun une unité de stockage, respectivement suivant une première voie de circulation et une deuxième voie de circulation, indépendantes, en des sens opposés transversalement au rack de stockage, les deux deuxièmes véhicules susceptibles de se croiser au travers des passages libres, adjacents à un même emplacement de transit.

Selon un mode de réalisation avantageux, le deuxième véhicule peut être configuré pour transporter une unité de stockage entre ledit au moins un emplacement de transit et ledit au moins un emplacement externe extérieur aux racks de stockage en mettant en oeuvre :

- au moins un déplacement transversal du deuxième véhicule selon la voie de circulation, suivi ou précédé par
- un déplacement longitudinal du deuxième véhicule entre le passage libre et ledit au moins un emplacement de transit adjacent, en dessous d'un des racks de stockage, suivant une direction de déplacement longitudinale audit rack de stockage.

Un changement de direction est opéré entre le déplacement longitudinal et le déplacement transversal, qui peut être opéré sans changer l'orientation d'un châssis du deuxième véhicule selon une possibilité, ou encore opéré avec un changement d'orientation du châssis selon une autre possibilité.

Selon un mode de réalisation, le ou chaque deuxième véhicule peut comprendre un système d'entraînement horizontal configuré pour assurer le déplacement sur la surface horizontale, et pour déplacer sélectivement le deuxième véhicule, suivant une première direction parallèle à la direction longitudinale des racks de stockage, ou suivant une direction transversale à la direction longitudinale du rack, ainsi qu'un système de changement de direction de la première direction à la deuxième direction ou inversement, sans changer l'orientation du véhicule.

Selon un mode de réalisation, le ou les premiers véhicules comprennent en tout ou partie :

- un système d'entraînement horizontal configuré pour déplacer le véhicule sur la surface horizontale,
- au moins un mât, et
- un système de transfert, déplaçable verticalement le long du mât configuré pour transférer une unité de stockage entre le premier véhicule et un des emplacements de stockage.

Selon un mode de réalisation, ladite installation peut comprendre les unités de stockage, et dans laquelle les unités de stockage sont des contenus palettisés, comprenant chacun une palette.

Selon un mode de réalisation, ladite installation peut comprendre une barrière périphérique forme un enclos à accès limité contenant les racks de stockage, ainsi que les premiers véhicules et les deuxièmes véhicules circulant sur la surface horizontale.

Selon un mode de réalisation, ladite installation peut comprendre:

- un convoyeur d'entrée pour des unités de stockage, traversant la barrière périphérique pour l'entrée d'unités de stockage jusqu'à au moins un emplacement extérieur au rack de stockage, lesdites unités destinées à être transportées par les deuxièmes véhicules jusqu'à au moins un emplacement de transit, et en vue de leur chargement dans les emplacements de stockage du rack,
- un convoyeur de sortie pour des unités de stockage, traversant la barrière périphérique, pour la sortie d'unités de stockage retirées des emplacements de stockage du rack de stockage, acheminées par les deuxièmes véhicules depuis au moins un emplacement de transit jusqu'à au moins un emplacement extérieur aux racks de stockage.

Selon un **deuxième aspect,** la présente divulgation est relative à un procédé de chargement et de retrait mettant en oeuvre une installation de stockage et de retrait selon la présente divulgation, dans lequel :

- un retrait d'une unité de stockage depuis un emplacement de stockage de l'un des racks de stockage est effectué par :

    -- des opérations de transfert automatisé de l'unité de stockage depuis l'emplacement de stockage du rack de stockage jusqu'à au moins un emplacement de transit sous le rack de stockage, par le ou l'un des premiers véhicules puis par :
    -- des opérations de transfert automatisé de l'unité de stockage par le ou l'un des deuxièmes véhicules depuis ledit au moins un emplacement de transit jusqu'à au moins un emplacement externe extérieur aux racks de stockage, et/ou
    - un chargement d'une unité de stockage dans un emplacement de stockage dans le rack de stockage est opéré par :

        -- des opérations de transfert automatisé de l'unité de stockage depuis ledit au moins un emplacement externe, extérieur aux racks de stockage jusqu'à au moins un emplacement de transit, sous un des racks de stockage, par le ou l'un des deuxièmes véhicules, puis par,
        -- des opérations de transfert automatisé de l'unité de stockage depuis ledit au moins un emplacement de transit jusqu'à l'emplacement de stockage dans ledit rack de stockage, par le ou l'un des premiers véhicules.

Selon un mode de réalisation du procédé mettant en oeuvre une installation selon la présente divulgation, en particulier dépourvue de système mécanique de stockage, dans lequel :

- lors du retrait selon le deuxième aspect, ledit au moins un premier véhicule transfère l'unité de stockage depuis l'emplacement de stockage du rack de stockage jusqu'à au moins un emplacement de transit sous le rack de stockage, en déposant l'unité de stockage sur le deuxième véhicule stationné sur ledit au moins un emplacement de transit ;
- lors du chargement selon le deuxième aspect, ledit au moins un deuxième véhicule embarquant l'unité de stockage est stationné audit au moins un emplacement de transit, lorsque ledit au premier véhicule transfère l'unité de stockage depuis ledit emplacement de transit jusqu'à l'emplacement de stockage.

Selon un autre mode de réalisation du procédé de chargement et de retrait selon la présente divulgation mettant en oeuvre une installation selon la présente divulgation, pourvue d'au moins un système mécanique de stockage, dans lequel :

- lors du retrait selon le deuxième aspect, ledit au moins un premier véhicule transfère l'unité de stockage depuis l'emplacement de stockage du rack de stockage jusqu'à au moins un emplacement de transit sous le rack de stockage, en déposant l'unité de stockage sur le système mécanique de stockage, à distance de la surface horizontale,
- lors du chargement selon le deuxième aspect, l'unité de stockage est stockée sur l'emplacement de transit à distance de la surface horizontale par le système mécanique de stockage, lorsque ledit au premier véhicule transfère l'unité de stockage depuis ledit emplacement de transit.

Selon un mode de réalisation du procédé de chargement et de retrait la présente divulgation, mettant en oeuvre une installation selon la présente divulgation, dans lequel :

- lors du retrait selon le deuxième aspect, les opérations de transfert automatisé par le ou l'un des deuxièmes véhicules sont effectuées par le ou l'un des deuxièmes véhicules circulant au moins selon ledit déplacement longitudinal, depuis ledit au moins un emplacement de transit jusqu'au passage libre adjacent, suivi, après un changement de direction du deuxième véhicule, du déplacement transversal du deuxième véhicule au travers du passage libre le long de la voie de circulation, pour se déplacer en dehors des racks de stockage jusqu'au moins un emplacement externe aux racks de stockage,
- lors du chargement selon le deuxième aspect, les opérations de transfert automatisé par le ou l'un des deuxièmes véhicules sont effectuées par le ou l'un des deuxièmes véhicules circulant le long de la voie de circulation jusqu'au passage libre en dessous du rack de stockage, adjacent audit au moins un emplacement de transit, suivi, après un changement de direction du deuxième véhicule, par le déplacement longitudinal depuis le passage libre jusqu'audit emplacement de transit adjacent.

Selon un mode de réalisation, la présence des passages libres, doubles, peut permettre la mise en œuvre d'un procédé de chargement et de retrait pour lequel les passages libres adjacents audit emplacement de transit sont des passages doubles, comprenant pour le ou chaque emplacement de transit:

- des premiers passages libres de différents racks de stockage formant la première voie de circulation pour les deuxièmes véhicules,
- de deuxièmes passages libres desdits différents racks de stockage, formant la deuxième voie de circulation pour les deuxièmes véhicules.

Avantageusement, le procédé peut prévoir que les deuxièmes véhicules circulent uniquement suivant un premier sens le long de la première voie de circulation, et les deuxièmes véhicules circulent uniquement suivant un deuxième sens, opposé au premier sens, le long de la deuxième voie de circulation. Les voies étant indépendantes, la circulation des deuxièmes véhicules selon la première voie de circulation n'interfère pas avec la circulation des deuxièmes véhicules suivant la deuxième voie de circulation.

La présente divulgation concerne encore une installation selon la présente divulgation comprenant une unité de contrôle, en particulier une unité centrale, comprenant un ou plusieurs microprocesseurs, une mémoire et un jeu d'instructions configurées pour coopérer le ou les microprocesseurs pour mettre en oeuvre le procédé de chargement et de retrait selon la présente divulgation.

**Brève description des dessins**

D'autres caractéristiques, détails et avantages apparaîtront à la lecture de la description détaillée ci-après, et à l'analyse des dessins annexés, sur lesquels :

**Fig. 1**

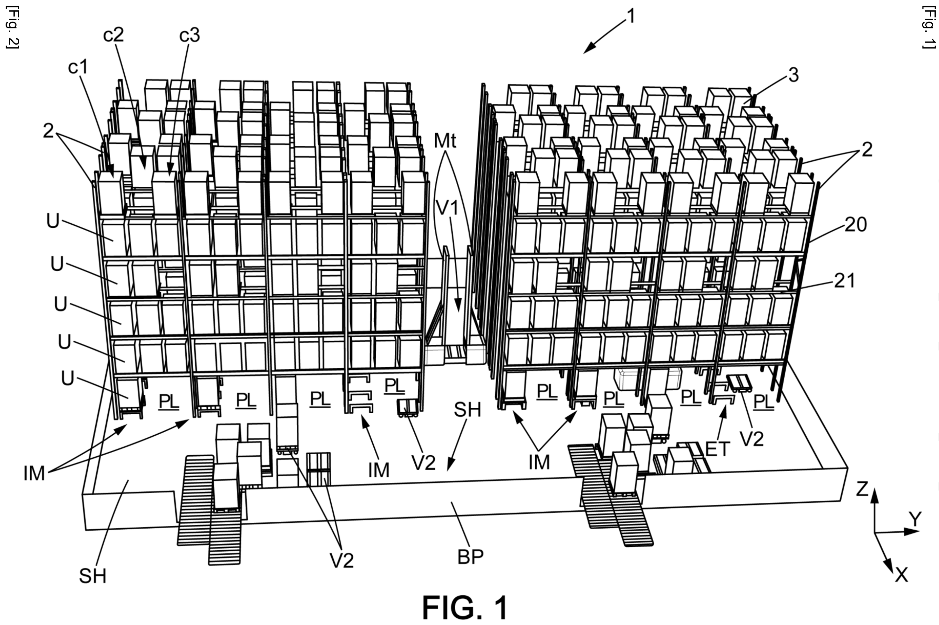

[Fig. 1] illustre un mode de réalisation d'installation de stockage et de retrait qui comprend :

- des racks de stockage, agencés parallèlement entre eux, en formant des allées entre les racks, chaque rack comprenant une pluralité de colonnes réparties suivant la longueur du rack, chaque colonne comportant une pluralité d'emplacements de stockage superposés pour le stockage des unités de stockage

- des premiers véhicules comportant un système de transfert déplaçable verticalement le long d'un mât les premiers véhicules configurés pour desservir les emplacements de stockage du rack de stockage,
- des systèmes de stockage temporaire agencés sous les racks formés par des couples d'interfaces mécaniques, certains emplacements sous le rack étant dépourvus d'interfaces mécaniques pour laisser des passages libres pour la circulation de véhicules au travers des racks de stockage.
- des deuxièmes véhicules configurés pour se déplacer sous les racks de stockage, pour déposer ou saisir des unités de stockage sous les racks, et se déplacer transversalement au rack de stockage au travers des passages libres,
- une barrière périphérique formant un enclos pour les racks de stockage, ainsi qu'un enclos pour les premiers véhicules et les deuxièmes véhicules, limitant l'accès
- un convoyeur d'entrée configuré pour l'entrée des unités de stockage dans ledit enclos,
- un convoyeur de sortie configuré pour la sortie des unités de stockage hors dudit enclos.

**Fig. 2**

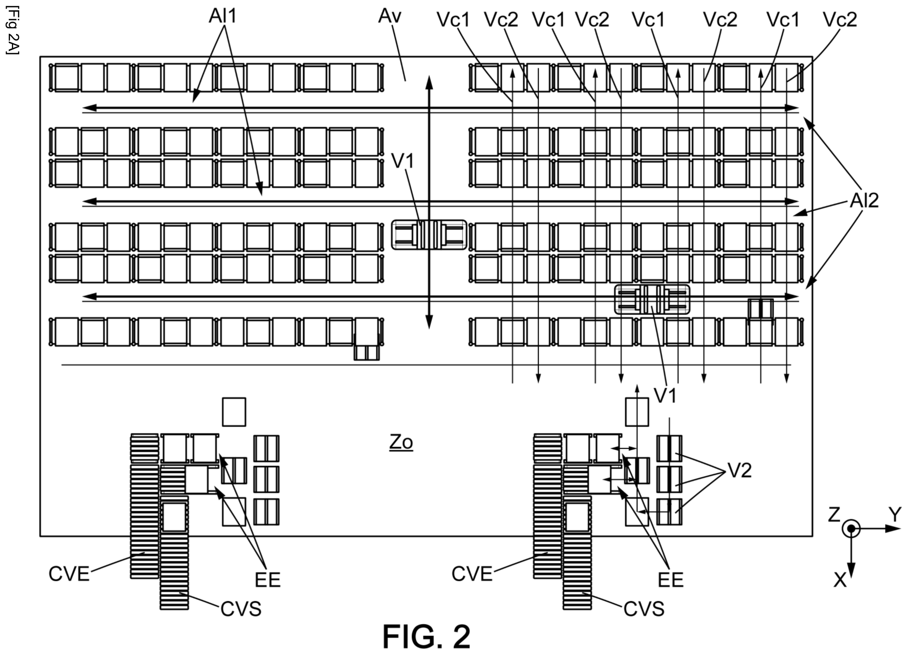

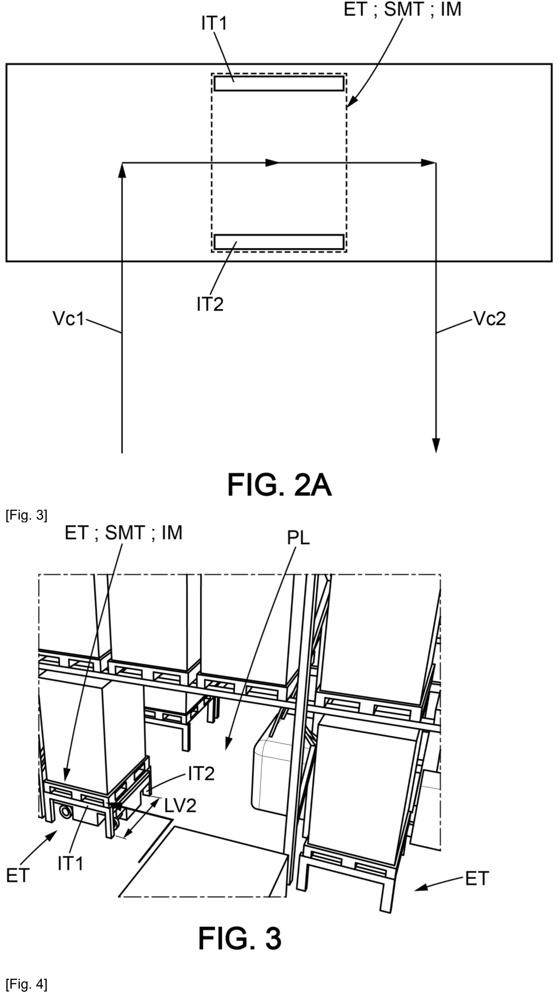

[Fig. 2] est une vue de dessus de l'installation illustrant :

- les voies de circulation des premiers véhicules le long des allées entre les racks de stockage,
- les voies de circulation des deuxièmes véhicules, transversalement au rack de stockage, au travers de passages libres, doubles, transversalement au rack de stockage, comprenant une première voie de circulation pour la circulation des deuxièmes véhicules suivant un premier sens uniquement, et une deuxième voie de circulation, indépendante, pour la circulation des deuxièmes véhicules suivant un deuxième sens uniquement, opposé au premier sens.

**Fig. 2A**
[Fig. 2A] est une vue de détail selon une alternative de la figure 2 pour laquelle la première voie de circulation et la deuxième voie de circulation, transversale au rack de stockage, sont disposées, de part et d'autre des couples d'interfaces mécaniques, adjacentes, la figure 2A illustrant une trajectoire possible du deuxième véhicule, qui :

- se déplace suivant le premier sens jusqu'à un des passages libres sous le rack de stockage le long de la première voie de circulation, adjacent au couple d'interfaces mécaniques,
- change de direction et se déplace longitudinalement au rack de stockage jusqu'à une position entre les interfaces mécaniques du couple d'interfaces mécanique, pour saisir une unité de stockage par une montée du plateau, ou pour déposer une unité de stockage sur les deux interfaces mécaniques du couple, lorsque le deuxième véhicule est à l'arrêt entre les interfaces mécaniques,

- se déplace longitudinalement jusqu'un autre passage libre sur la deuxième voie circulation indépendante,

- change de direction et se déplace transversalement au rack des stockages le long de la deuxième voie de circulation, dans un deuxième sens opposé au premier sens.

### Fig. 3

[Fig. 3] est une vue de détail de la figure 2, illustrant la trajectoire d'un deuxième véhicule suivant une direction transversale jusqu'au passage libre, puis, après un changement de direction du deuxième véhicule, suivant une direction longitudinale jusqu'à une position du deuxième véhicule entre les deux interfaces mécaniques du couple qui soutient une unité de stockage, et en particulier un contenu palettisé, illustrant de manière notable la dimension en longueur du deuxième véhicule, qui est orientée suivant la direction transversale et qui est inférieure à l'écartement entre les deux interfaces mécaniques du couple.

### Fig. 4

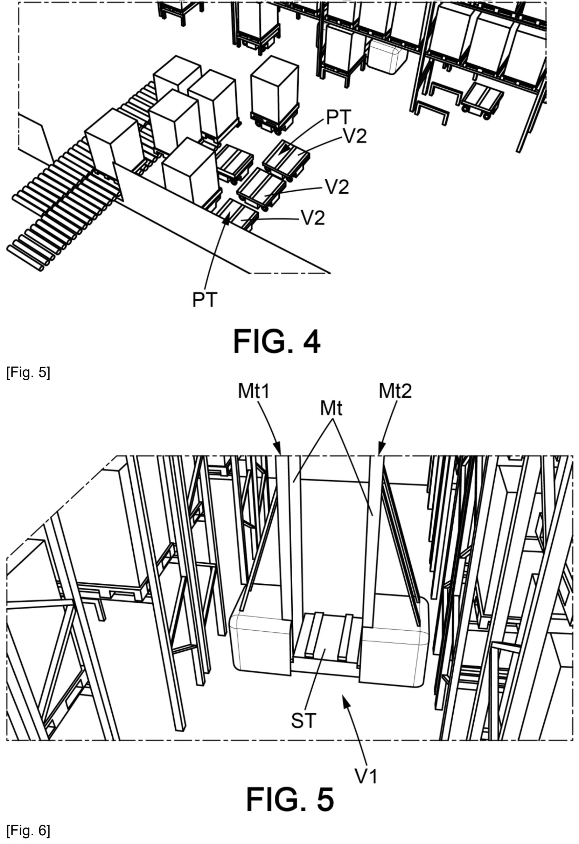

[Fig. 4] est une vue de détail illustrant la circulation des deuxièmes véhicules, qui sont configurés pour circuler depuis les systèmes mécaniques de stockage, et selon une trajectoire pour déposer une unité de stockage en un emplacement extérieur au rack, tel que sur un premier dispositif de transfert associé au convoyeur de sortie, puis se charger d'une unité de stockage provenant du convoyeur d'entrée par un deuxième dispositif de transfert.

### Fig. 5

[Fig. 5] est une vue du premier véhicule, qui est dans une avenue, transversale, entres des racks, et configuré pour circuler le long de ladite avenue pour changer d'une allée entre deux racks, à une autre allée entre deux autres racks distincts.

### Fig. 6

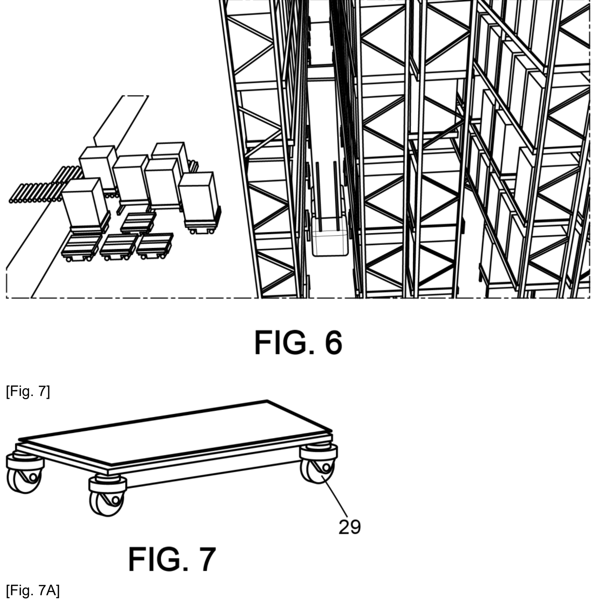

[Fig. 6] une vue du premier véhicule entre deux racks de stockage.

### Fig. 7

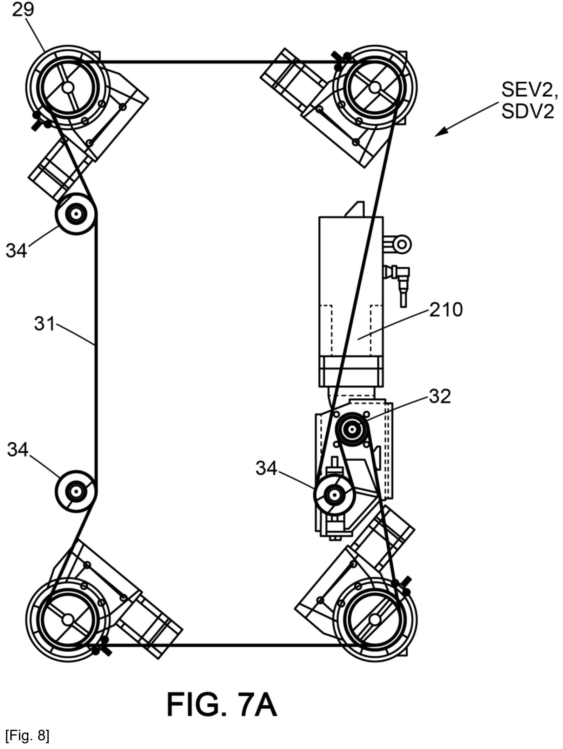

[Fig. 7] est une vue schématique d'un mode de réalisation d'un chariot présentant un système d'entrainement horizontal qui comprend plusieurs roues motorisées.

### Fig. 7A

[Fig. 7A] est une vue d'un mode de réalisation possible d'un système de changement de direction, du chariot de la figure 7.

### Fig. 8 à 10

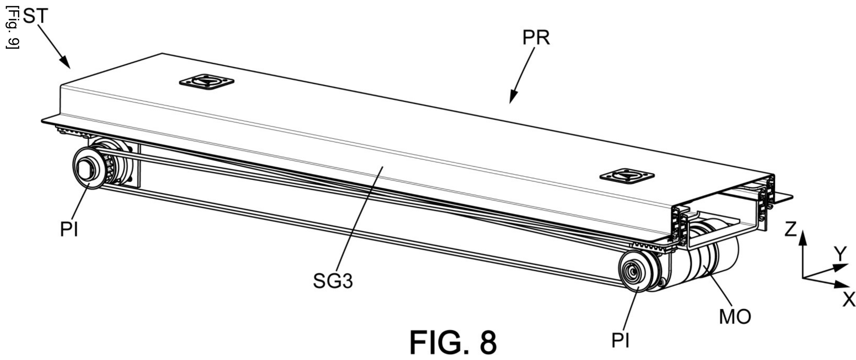

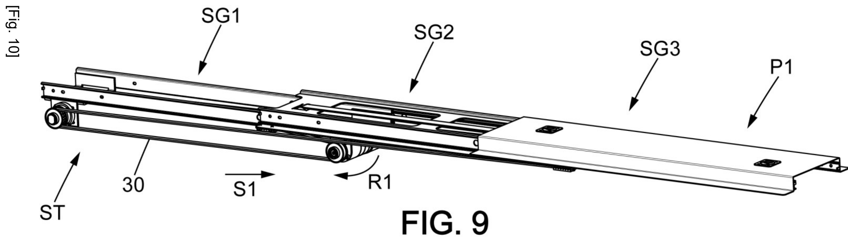

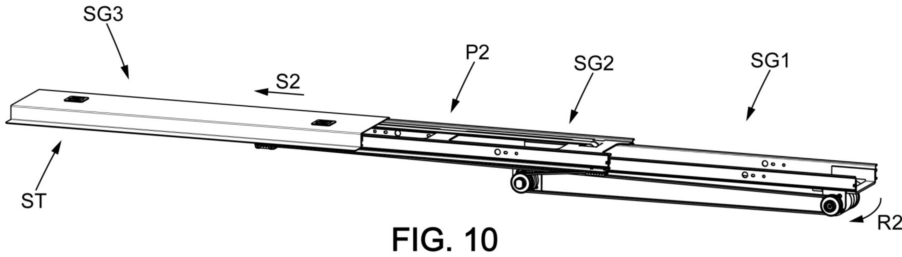

[Fig. 8], [Fig. 9] et [Fig. 10] sont des vues d'un mode de réalisation possible d'un système de transfert des premiers véhicules, respectivement dans une position rétractée, une première position déployée et une deuxième position déployée.

### Description des modes de réalisation

Aussi, la présente divulgation est relative selon un premier aspect à une installation de stockage et de retrait 1 pour unités de stockage U comprenant :

/a/ une pluralité de racks de stockage 2, espacés les uns par rapport aux autres en formant des allées 3, chaque rack de stockage 2 comprenant une pluralité d'emplacements de stockage superposés pour le soutien des unités de stockage U, en hauteur par rapport à une surface horizontale SH, telle que le sol,

/b/ au moins un emplacement de transit ET agencé sous au moins l'un des racks de stockage 2 pour recevoir temporairement une unité de stockage U,

/c/ au moins un premier véhicule V1 configuré pour circuler dans les allées 3, ledit premier véhicule étant en outre configuré pour transporter une unité de stockage U entre un emplacement de stockage en hauteur et ledit au moins un emplacement de transit ET,

/d/ au moins un deuxième véhicule V2 configuré pour transporter une unité de stockage U entre ledit au moins un emplacement de transit ET et au moins un emplacement externe EE aux racks de stockage.

De manière générale et selon un repère XYZ à la figure 1 :

- la direction X, horizontale et transversale, peut représenter la direction en largeur (ou en profondeur) des racks de stockage 2,

- la direction Y, horizontale et longitudinale, peut représenter la direction en longueur des racks de stockage 2,

- la direction Z, verticale peut représenter la direction verticale des racks de stockage.

Les racks de stockage peuvent présenter des montants 20, s'étendant suivant la direction Z, verticale, qui sont répartis, suivant la direction Y en longueur du rack, et suivant la direction X en largeur. Des traverses 21, longitudinales, peuvent relier les montants successifs, suivant la direction Y longitudinale, et des traverses, transversales, peuvent relier les montants suivant la direction X, transversale.

Les traverses longitudinales peuvent être réparties suivant différents niveaux, en hauteur suivant la direction Z, verticale, afin de former différentes surfaces de soutien, superposées, pour le stockage des unités de stockage U. Alternativement les unités de stockage peuvent être en appui sur des interfaces mécaniques, typiquement des équerres, saillantes l'une vers l'autre suivant la direction Y, et selon un mode de réalisation non illustré.

Par exemple, la ou chacune des unités de stockage U peut être en appui sur deux traverses longitudinales de même niveau, parallèles entre elles, et en particulier lorsque l'unité de stockage comprend une palette.

L'écartement entre les montants 20, suivant la direction Y, longitudinale, est typiquement constant et typiquement supérieur au moins à la dimension de l'unité de stockage U lorsque stockée dans un des emplacements de stockage du rack. L'écartement entre deux montants 20 successifs suivant la longueur du rack peut correspondre à la dimension de l'unité de stockage, voire être légèrement supérieur à cette dimension, afin de stocker une seule unité de stockage dans un emplacement de stockage, suivant cette direction entre les deux montants.

L'écartement entre les deux montants 20 successifs suivant la longueur du rack peut correspondre à un multiple (par exemple un multiple par 2, par 3, par 4...) de la dimension (notamment la largeur) de l'unité de stockage stockée légèrement supérieure à cette dimension, afin de former plusieurs emplacements de stockage (par exemple 2, 3, 4...) adjacents configurés pour stocker une pluralité d'unités de stockage, l'un à côté de l'autre, suivant cette direction entre les deux montants. Les différents emplacements de stockage, adjacents suivant la direction longitudinale, peut être délimités physiquement ou non.

Par exemple à la figure 1, deux montants successifs du rack de stockage sont espacés suivant une dimension légèrement supérieure à trois unités de stockage, de sorte à permettre le stockage de trois unités de stockage U, côte à côte entre les deux montants, au niveau de trois emplacements de stockage juxtaposés entre les deux montants.

De manière générale, l'écartement entre deux montants successifs, autorise un chargement ou un déchargement de l'unité de stockage, selon la direction transversale X, par insertion ou retrait de l'unité de stockage suivant la direction transversale.

L'écartement entre deux montants successifs, suivant la direction transversale X peut correspondre à la dimension de l'unité de stockage U (par exemple la dimension en longueur) stockée dans un emplacement de stockage entre les deux montants successifs.

De manière générale, le rack de stockage (ou chaque rack de stockage) forme une pluralité de colonnes suivant la longueur du rack, à savoir selon la direction longitudinale Y, chaque colonne comprenant une pluralité d'emplacements de stockage superposés configurés respectivement pour recevoir des unités de stockage, à savoir que chaque emplacement de stockage est configuré pour recevoir une unité de stockage U. Dans un mode de réalisation (non illustré) chaque colonne est notamment limitée suivant la direction longitudinale Y, par les montants 20 du rack.

Selon un mode de réalisation, et aux figures 1, 2 chaque rack de stockage permet de stocker pour chaque niveau du rack, un nombre entier $N_U$ d'unités de stockage qui est un multiple de trois, et comprend ainsi $N_U$ colonnes, suivant la direction longitudinale Y. Par exemple à la figure 1, trois colonnes juxtaposées suivant la direction longitudinale sont intercalées entre deux montants 20 successifs du rack. Par exemple, le nombre Nu est égal à 12 et le nombre de colonnes est égal à 12.

De manière générale, les racks de stockage 2 sont en appui sur la surface horizontale SH, typiquement par leurs montants 20. La surface horizontale SH peut être typiquement une surface de roulement tel que le sol de l'installation.

Les emplacements de stockage des racks de stockage sont destinés au stockage des unités de stockage. Les racks de stockage peuvent comprendre plusieurs racks de stockage 2 agencés en parallèle, séparés par une ou plusieurs allées s'étendant chacun en longueur suivant la direction longitudinale Y, en particulier :

- plusieurs (premiers) racks de stockage 2 agencés en parallèle, séparés par une ou plusieurs premières allées AI1
- plusieurs (deuxièmes) racks de stockage racks de stockage 2 agencés en parallèle, séparés par une ou plusieurs deuxièmes allées AI2.

De manière générale, les emplacements de stockage de deux des racks de stockage disposés de part et d'autre d'une des allées sont desservis (chargé ou déchargé) par un premier véhicule V1.

Dans un mode de réalisation (non représenté), des emplacements de stockage sont prévus sous les racks de stockage, en sus des emplacements de transit ET. Prévoir de stocker des unités de stockage en dessous des racks de stockage permet d'augmenter la densité de stockage.

Le ou les emplacements de transit ET sont agencés sous les racks de stockage 2 et configurés pour recevoir temporairement une unité de stockage U.

Selon une possibilité, notamment illustrée aux figures, les emplacements de transit ET peuvent présenter des systèmes mécaniques de stockage SMT et tel qu'illustré aux figures. Le (ou chaque) système mécanique de stockage autorise un stockage temporaire d'une unité de stockage U, à une distance verticale de la surface horizontale SH.

Un tel système mécanique de stockage permet de découpler les opérations du premier véhicule V1 et du deuxième véhicule V2, lors d'opération de retrait ou de chargement.

Lors des opérations de retrait, le premier véhicule V1 peut transférer une unité de stockage depuis un des emplacements de stockage, et jusqu'à sa dépose sur ledit système mécanique de stockage SMT, et sans attendre un des deuxièmes véhicules. Le système mécanique de stockage assure ainsi le stockage temporaire de l'unité de stockage U, le temps qu'un des deuxièmes véhicules vienne se glisser sous ladite unité de stockage U, et en vue d'en assurer son transport en dehors des racks de stockage.

Lors des opérations de chargement, à l'inverse, l'un des deuxièmes véhicules V2 peut circuler jusqu'au système mécanique de stockage SMT, et y déposer ladite unité de stockage, et sans attendre le premier véhicule V1. Le système mécanique de stockage assure ainsi le stockage temporaire de l'unité de stockage U, le temps que le premier véhicule V1 vienne prendre ladite unité de stockage U, et en vue d'en assurer son transfert jusqu'à un des emplacements de stockage, dans le rack de stockage.

Les premiers racks de stockage et les deuxièmes racks de stockage peuvent être juxtaposés, en étant séparés par une avenue Av. L'avenue Av est délimitée, d'un côté, par les premiers racks, et d'un deuxième côté, par les deuxièmes racks. L'avenue Av s'étend suivant la direction transversale X et peut être prévue en communication avec les premières allées AI1 et les deuxièmes allées AI2. On remarque que les premiers racks de stockage et les deuxièmes racks de stockage peuvent s'étendre respectivement en prolongement suivant les directions longitudinales des racks.

Selon une deuxième possibilité (non illustrée), ledit emplacement de transit ET peut être dépourvu de système mécanique de stockage sous le rack, destiné à assurer un soutien de l'unité de stockage et son stockage temporaire, à distance verticale de la surface horizontale SH. Une telle solution impose de synchroniser les opérations du premier véhicule V1 et du deuxième véhicule V2, lors d'opération de retrait ou de chargement. Le premier véhicule V1 est alors configuré pour transporter ladite unité de stockage entre ledit emplacement de stockage en hauteur et jusqu'en appui sur une surface supérieure d'au moins un deuxième véhicule V2 stationné sur l'emplacement de transit ET.

Autrement dit, selon cette deuxième possibilité, l'emplacement de transit ET est une zone dédiée sous le rack pour stationner un deuxième véhicule en attente de recevoir une unité de stockage.

Lors des opérations de retrait, le premier véhicule V1 peut transférer une unité de stockage depuis un des emplacements de stockage, et jusqu'à sa dépose sur un des deuxièmes véhicules V2 stationnés dans ledit emplacement de transit ET. Un deuxième véhicule V2 doit donc préalablement être déplacé jusqu'audit emplacement de transit ET, avant que le premier véhicule V1 ne dépose ladite unité de stockage.

Lors des opérations de chargement, à l'inverse, l'un des deuxièmes véhicules se déplace jusqu'audit emplacement de transit ET en embarquant une unité de stockage U, et successivement le premier véhicule V1 assure le transfert de l'unité de stockage embarqué sur le deuxième véhicule stationné audit emplacement de transit, et jusqu'à un des emplacements de stockage, dans le rack de stockage2.

De manière générale, l'emplacement de transit ET, ou tout ou partie des emplacements de transit sont agencés verticalement au droit d'un emplacement de stockage d'une colonne du rack de stockage.

Les racks de stockage 2 peuvent comprendre une pluralité de couples de montants verticaux, chaque couple de montants comprenant un montant proximal, proche de l'allée, faisant face à un montant distal, éloigné de l'allée L'emplacement de transit ET (y compris le cas échéant le système mécanique de stockage SMT) peut présenter un encombrement suivant la direction transversale du rack de stockage inférieur ou égal à la distance entre un des montants, proximal, et un des montants, distal, du rack de stockage, à savoir sensiblement égal à la dimension en largeur du rack de stockage suivant la direction transversale Y.

L'emplacement de transit ET (y compris le cas échéant le système mécanique de stockage SMT) peut présenter un encombrement suivant la direction longitudinale du rack de stockage 2, supérieur, voire égal à la dimension d'une unité de stockage, lorsque stockée temporairement sur l'emplacement de transit.

L'emplacement de transit ET (avec le système mécanique de stockage SMT ou dépourvu de tel système mécanique de stockage) peut s'étendre sur une empreinte sur la surface horizontale SH, tel que le sol, dans les limites d'une des colonnes, et plus particulièrement d'un emplacement de stockage de la colonne.

Selon un mode de réalisation, tout ou partie des emplacements de transit ET, peut s'étendre individuellement dans les limites de la colonne, plus particulièrement dans les limites d'un emplacement de stockage de la colonne, au droit de la colonne à savoir que l'emplacement de transit est aligné verticalement avec des emplacements de stockage superposés de la colonne, individuels. Il est alors possible de transférer une unité de stockage U, entre un emplacement de stockage, et ledit emplacement de transit au droit de la colonne, par un déplacement comprenant une composante suivant la direction verticale Z, et une composant suivant la direction transversale X uniquement, à savoir que le déplacement de l'unité de stockage est dépourvu de composante suivant la direction longitudinale Z.

Ledit au moins un premier véhicule V1 est configuré pour circuler dans les allées 3, et est configuré pour transporter une unité de stockage U entre un emplacement de stockage en hauteur d'un rack de stockage et ledit au moins un emplacement de transit ET.

Aussi, ledit premier véhicule V1 circule principalement suivant la direction longitudinale Y, le long des allées 3. Ledit premier véhicule peut encore circuler, sur l'avenue Av suivant la direction transversale X, et comme illustré à la figure 2, et encore suivant la direction Y pour changer d'une allée à une autre, par exemple pour passer d'une première allée Al1 à une autre première allée, d'une première allée à une deuxième allée Al2, ou inversement, ou encore pour passer d'une deuxième allée Al2 jusqu'à une autre deuxième allée.

Le ou les premiers véhicules V1, peuvent présenter un système d'entrainement horizontal configuré pour déplacer le véhicule sur la surface horizontale. Le système d'entrainement horizontal et configuré pour déplacer sélectivement le premier véhicule, suivant une première direction parallèle à la direction longitudinale des racks de stockage le long des allées, voire suivant une direction transversale à la direction longitudinale du rack en particulier selon l'avenue, un tel système d'entrainement horizontal présentant un ou plusieurs roues motorisées.

Ledit premier véhicule V1 est de préférence configuré pour circuler en champ libre sur la surface horizontale SH. Autrement dit la surface horizontale est dépourvue de rails de guidage, en particulier pour le déplacement du premier véhicule.

Selon un mode de réalisation, le système d'entrainement horizontal peut présenter un système de changement de direction de la première direction à la deuxième direction ou inversement, sans changer l'orientation du véhicule qui reste toujours orienté longitudinalement, parallèlement à la direction longitudinale des racks de stockage.

Il peut s'agir de la solution décrite dans la demande EP4373690 dont le chariot comprend au moins 3 roues motrices destinées à rouler sur le sol, aptes à pivoter d'au moins 90°.

Comme illustré à titre d'exemple aux figures 7 et 7A, lesdites roues motrices 29 sont montées sur des dispositifs de pivotement et d'entrainement fixés sur le châssis 23 dudit chariot, chacun desdits dispositifs de pivotement et d'entrainement comprenant un moteur d'actionnement de moyens de pivotement d'une roue motrice 29 autour d'un axe vertical, destinés à faire pivoter une roue motrice 29 autour d'elle-même.

Les différentes roues motrices 29 peuvent être pivotées autour de leur axe vertical, de préférence par un unique moteur 210 d'entrainement en rotation desdites roues motrices 29 destiné à actionner des moyens d'entrainement en rotation desdites roues motrices logés dans lesdits dispositifs de pivotement et d'entrainement. Le moteur 210 entraîne une courroie dentée 31, via un galet 32 accouplé à l'arbre moteur. Cette courroie 31 est maintenue tendue à l'aide de galets tendeurs 34.

Le système de changement de direction peut à titre d'alternative comprendre des roues omnidirectionnelles.

À titre encore d'autres modes de réalisation, le système de changement de direction assure le changement de direction en assurant un changement d'orientation d'un châssis du véhicule, par exemple par l'intermédiaire d'une ou plusieurs roues pivotantes, ou par une commande des roues motorisées selon des vitesses de rotation différentes.

Le premier véhicule V1 peut encore typiquement comprendre au moins un mât Mt, et un système de transfert ST, déplaçable verticalement le long du mât configuré pour transférer une unité de stockage entre le premier véhicule et un des emplacements de stockage.

Ledit au moins mât s'étend depuis un châssis du premier véhicule et peut comprendre un premier mât Mt1 et un deuxième mât Mt2, en parallèle. Le système de transfert ST est configuré pour se déplacer en hauteur suivant la direction dudit au moins un mât. Ledit mât, en particulier le premier mât et le deuxième mât, peut être télescopique et être rétracté dans une position de moindre encombrement vertical, en particulier lorsque le premier véhicule se déplace, et être déployé pour atteindre les emplacements de stockage supérieurs du rack de stockage, par exemple des emplacements de stockage agencés jusqu'à 12 mètres de hauteur.

Le système de transfert peut comprendre typiquement un système télescopique, en particulier tel qu'enseigné par le document FR3148017A1, en particulier comme illustré aux figures 8 à 10, ou encore tel qu'enseigné dans ce document comme état de la technique. Un tel système télescopique ST peut comprendre un bras télescopique comprenant un premier segment SG1 et un deuxième segment SG2 monté en coulissement par rapport au premier segment suivant la direction X, transversale, en particulier lorsque le premier véhicule V1 est dans une des allées 3.

Un dispositif d'actionnement motorisé comprend une transmission reliant le premier segment et le deuxième segment, la transmission comprenant une courroie 30 et des poulies PI montées en rotation sur le premier segment SG1 coopérant avec ladite courroie 30, ainsi qu'un moteur MO configuré pour entrainer l'une motorisée des poulies, lesdites poulies agencées en au moins deux positions décalées sur le premier segment suivant la direction de coulissement.

Le dispositif d'actionnement motorisé est configuré pour, dans un premier sens de rotation de la poulie motorisée, déployer le système télescopique d'une position rétractée PR (figure 8) entre le premier segment SG1 et le deuxième segment SG2 jusqu'à une position déployée (Figure 9 ou 10) entre le premier segment et le deuxième segment et, dans un deuxième sens de rotation de la poulie motorisée, rétracter le système de transfert de la position déployée jusqu'à la position rétractée.

Dans la position rétractée PR du système télescopique, le système de transfert peut assurer un positionnement de ladite unité de stockage dans l'allée, par exemple à l'aplomb du châssis du premier véhicule, en particulier entre le premier mât Mt1 et le deuxième mât Mt2. Le passage du système télescopique dans la position déployée permet de déplacer ladite unité de stockage, suivant la direction transversale, dans le rack, en vue de sa dépose dans un emplacement de stockage.

Selon un mode de réalisation, le système télescopique peut être :

- déployable de la position rétractée PR jusqu'à la position déployée qui est une première position déployée P1 dans un premier sens S1 de déploiement du deuxième segment par rapport au premier segment et comme illustré à la figure 9,
- déployable de la position rétractée jusqu'à une deuxième position déployée P2 , dans un deuxième sens S2 de déploiement du deuxième segment par rapport au premier segment et comme illustré à la figure 10.

À partir d'une position du premier véhicule V1 dans une des allées 3 entre deux racks de stockage 2, le déploiement du système télescopique dans la première position déployée P1 permet le transfert de l'unité de stockage U dans l'un des deux racks de stockage, et le déploiement du système télescopique dans la deuxième position déployée P2 permet le transfert de l'unité de stockage dans l'autre rack de stockage, opposé par rapport à ladite allée.

Le dispositif d'actionnement motorisé est alors configuré pour, dans le premier sens de rotation R1 de la poulie motorisée, déployer le bras télescopique de la position rétractée entre le premier segment et le deuxième segment jusqu'à la première position déployée entre le premier segment et le deuxième segment et, dans le deuxième sens de rotation de la poulie motorisée, rétracter le système de segment de la première position déployée jusqu'à la position rétractée.

Le dispositif d'actionnement motorisé est encore configuré pour, dans le deuxième sens de rotation R2 de la poulie motorisée (opposé au premier sens R1), déployer le système de segment de la position rétractée entre le premier segment et le deuxième segment jusqu'à la deuxième position déployée entre le premier segment et le deuxième segment et, dans le premier sens de rotation de la poulie motorisée, rétracter le système de segment de la deuxième position déployée jusqu'à la position rétractée PR.

De manière générale, le bras télescopique peut présenter un troisième segment SG3 en coulissement sur le deuxième segment selon la direction de coulissement ainsi qu'une deuxième transmission comprenant une première courroie et une deuxième courroie, antagonistes :

- ladite première courroie présentant une première extrémité liée au premier segment et une deuxième extrémité liée au troisième segment, ladite première courroie coopérant avec une poulie solidaire du deuxième segment, ladite première courroie configurée pour se tendre et assurer le déploiement du troisième segment SG3 par rapport au deuxième segment SG2 lors du déploiement du deuxième segment SG2 par rapport au premier segment SG1 depuis la position rétractée jusqu'à la position déployée ,
- la deuxième courroie présentant une première extrémité liée au premier segment et une deuxième extrémité liée au troisième segment SG3 coopérant avec une poulie solidaire du deuxième segment SG2, ladite deuxième courroie configurée pour se tendre et assurer la rétractation du troisième segment SG3 par rapport au deuxième segment SG2 lors de la rétractation du deuxième segment SG2 par rapport au premier segment SG1 depuis la position déployée jusqu'à la position rétractée.

Le premier véhicule peut être un chariot élévateur autoguidé tri directionnel conçu pour travailler dans des allées étroites. Ce chariot élévateur comprend un système de fourche déployable qui peut pivoter pour déposer ou extraire une unité de stockage d'un rack de stockage, de part et d'autre de l'allée, sans que le chariot élévateur ne tourne dans l'allée.

Le premier véhicule peut aussi être un chariot élévateur autoguidé pourvu d'un système de fourches télescopiques à déplacement bilatéral pour déposer ou extraire une unité de stockage d'un côté ou de l'autre de l'allée dans lequel il circule.

Le ou chaque deuxième véhicule V2 peut présenter un système d'entrainement horizontal SEV2 configuré pour assurer le déplacement sur la surface horizontale, le système d'entrainement horizontal SEV2 comprenant une ou plusieurs roues motorisées. Le deuxième véhicule V2 se déplace de préférence en champ libre sur la surface horizontale. Autrement dit la surface horizontale est dépourvue de rail de guidage.

Le système d'entrainement horizontal SEV2 est configuré pour déplacer sélectivement le deuxième véhicule V2, principalement suivant une direction transversale à la direction longitudinale du rack, mais encore suivant une première direction parallèle à la direction longitudinale des racks de stockage 2. Le système d'entraînement horizontal SEV2 peut présenter un système de changement de direction SDV2 de la première direction à la deuxième direction ou inversement, sans changer l'orientation du véhicule qui reste toujours orienté longitudinalement, perpendiculaire à la direction longitudinale des racks de stockage 2.

Il peut s'agir de la solution décrite dans la demande EP4373690 décrite ci-dessus en lien avec les figures 7 et 7A.

Le système de changement de direction peut à titre d'alternative comprendre des roues omnidirectionnelles.

À titre encore d'autre mode de réalisation, le système de changement de direction assure le changement de direction en changeant l'orientation du châssis du véhicule, par exemple par l'intermédiaire d'une ou plusieurs roues pivotantes, ou par une commande des roues motorisées selon des vitesses de rotation différen-

Le système d'entraînement horizontal des deuxièmes véhicules peut être identique ou différent de celui des premiers véhicules.

De manière générale, le ou les deuxièmes véhicules V2 sont configurés pour circuler en dehors des racks de stockage, au travers des allées, ou sous les racks de stockage 2 pour transférer une unité de stockage U entre un emplacement externe aux racks et ledit emplacement de transit ET.

Le ou les deuxièmes véhicules peuvent en outre être configurés pour se déplacer dans les allées, en coordination avec les premiers véhicules V1.

Avantageusement, le système de localisation des premiers et deuxièmes véhicules, tel que des lignes au sol ou des identifiants de localisation au sol ou sur le rack, est commun aux premiers et deuxièmes véhicules.

Selon une réalisation, le deuxième véhicule V2 peut comprendre un système de levage comprenant un plateau PT, identifié sur la figure 4, configuré pour passer d'une position basse de manière à autoriser un positionnement du deuxième véhicule en dessous d'une unité de stockage U en appui sur le système mécanique de stockage SMT jusqu'à une position haute pour laquelle le plateau soulève l'unité de stockage et dégage ladite unité de stockage U du système mécanique de stockage SMT.

Selon une autre réalisation, lorsque l'emplacement de transit est dépourvu de système mécanique de stockage, le deuxième véhicule V2 peut comprendre une surface supérieure configurée pour supporter une unité de stockage et pour permettre le transfert d'une unité de stockage entre le système de transfert du premier véhicule V1 et la surface supérieure du deuxième véhicule. À titre d'illustration, le système de transfert du premier véhicule V1 peut comporter un système de fourches télescopiques, et la surface supérieure du deuxième véhicule V2 peut comporter des rainures conçues pour recevoir les fourches télescopiques.

Selon la présente divulgation, la présente installation comprend encore au moins un passage libre PL sous lesdits racks de stockage, adjacent audit emplacement de transit ET, configuré pour permettre la circulation dudit au moins un deuxième véhicule V2 selon une voie de circulation Vc1 ; Vc2 transversale aux allées 3.

Par passage libre PL, on entend un passage sous le rack, autorisant la circulation des deuxièmes véhicules sur la surface horizontale, au travers de la voie circulation, qui est dépourvue de système mécanique de stockage SMT ou d'unité de stockage.

La voie de circulation traversant le passage libre PL est non seulement configurée pour la circulation des deuxièmes véhicules, mais est dépourvue d'emplacement de transit pour le stockage temporaire d'une unité de stockage sous le rack, et dépourvue d'unité de stockage.

La voie de circulation Vc1 ; Vc2 et ledit au moins un passage libre PL sont donc dépourvus de système mécanique de stockage SMT pour le stockage temporaire d'une unité de stockage qui nécessiterait une précision de guidage pour assurer une insertion du deuxième véhicule entre deux interfaces mécaniques du système mécanique de stockage temporaire.

La voie de circulation Vc1 ; Vc2 autorise une circulation des deuxièmes véhicules V2 embarquant une unité de stockage U, sans interruption en raison d'un stockage temporaire d'une unité de stockage, et sans limitation de vitesse due à une insertion du deuxième véhicule V2 au travers d'un système mécanique de stockage temporaire. La vitesse de circulation des deuxièmes véhicules peut être supérieure à 1,5 m/s, voire supérieure à 2 m/s, même lorsque le deuxième véhicule traverse l'un des racks de stockage en circulant sur la surface horizontale SH au travers du passage libre PL.

Le passage libre PL forme une section de la voie de circulation Vc1 (respectivement Vc2) au travers du rack pour la circulation d'une file de deuxièmes véhicules V2. Le passage libre PL s'étend en largeur de manière traversante au rack de stockage, suivant la direction transversale X, et au moins suivant une dimension correspondant à la dimension de l'unité de stockage U suivant la direction longitudinale Y. Le passage libre s'étend en hauteur, suivant la direction verticale, Z depuis la surface horizontale SH au moins suivant la hauteur cumulée du deuxième véhicule V2 et de l'unité de stockage U portée par le deuxième véhicule. Dans le cas où le deuxième véhicule comporte un système de levage, le passage libre s'étend en hauteur, suivant la direction verticale, Z depuis la surface horizontale SH au moins suivant la hauteur cumulée du deuxième véhicule V2 et de l'unité de stockage U portée par le système de levage en position haute du deuxième véhicule.

La voie de circulation Vc1 ; Vc2 transversale aux allées peut s'étendre sur une partie des racks de stockage 2, ou encore avantageusement sur tous les racks de stockage 2. À cet effet, les passages libres PL sont pourvus pour tout ou partie des racks de stockage 2, et sont alignés suivant la direction transversale X, pour former la voie de circulation Vc1, Vc2.

Selon la présente divulgation le deuxième véhicule est configuré pour transporter une unité de stockage entre ledit au moins un emplacement de transit ET et ledit au moins un emplacement extérieur aux racks de stockage en mettant notamment en oeuvre :

- au moins un déplacement transversal du deuxième véhicule V2 selon la voie de circulation Vc1 ; Vc2, suivi ou précédé par
- un déplacement longitudinal du deuxième véhicule V2 entre le passage libre PL et ledit au moins un emplacement de transit ET adjacent, en dessous d'un des racks de stockage, suivant une direction de déplacement longitudinale audit rack de stockage.

Autrement dit, le deuxième véhicule V2 est configuré pour modifier sa direction de déplacement entre une direction de déplacement transversale audit rack de stockage et une direction de déplacement longitudinale audit rack de stockage, lorsque ledit deuxième véhicule V2 est dans un passage libre PL.

Lorsque ledit emplacement de transit ET comprend le système mécanique de stockage SMT, ledit déplacement longitudinal du deuxième véhicule V2 entre le passage libre PL et ledit au moins un emplacement de transit ET peut assurer une position d'insertion du deuxième véhicule sous ladite unité de stockage U soutenue par le système mécanique de stockage SMT.

La flèche coudée à la figure 3, illustre le cheminement d'un deuxième véhicule V2 qui se déplace transversalement au rack de stockage jusqu'au passage libre PL sur la voie de circulation suivant la direction transversale X, puis se déplace suivant la direction longitudinale Y depuis le passage libre PL sous le rack de stockage 2 au travers du système de mécanique de stockage SMT, sous l'unité de stockage U soutenue sur l'emplacement de transit ET.

Un changement de direction du deuxième véhicule V2 est opéré entre le déplacement transversal suivant la direction transversale X, et la direction longitudinale Y, en particulier sans changer l'orientation du châssis du véhicule.

La présente divulgation est encore relative à un procédé de chargement et de retrait mis en œuvre avec une installation de stockage et de retrait 1 selon la présente divulgation.

Le procédé peut présenter, pour une opération /RT/ de retrait d'une unité de stockage U depuis un emplacement de stockage dans l'un des racks de stockage :

　　-- des opérations de transfert automatisé de l'unité de stockage U depuis l'emplacement de stockage dans un rack de stockage jusqu'audit au moins un emplacement de transit ET sous le rack de stockage 2, par le ou l'un des premiers véhicules V1 puis :
　　-- des opérations de transfert automatisé de l'unité de stockage U par le ou l'un des deuxièmes véhicules V2 depuis ledit au moins un emplacement de transit ET sous le rack de stockage jusqu'au moins un emplacement extérieur aux racks de stockage.

Les opérations de transfert automatisé par le ou l'un des deuxièmes véhicules V2 peuvent être effectuées par le ou l'un des deuxièmes véhicules circulant au moins selon un déplacement longitudinal depuis ledit au moins un emplacement de transit ET jusqu' au passage libre adjacent, suivi, après un changement de direction du deuxième véhicule V2, du déplacement transversal du deuxième véhicule depuis le passage libre PL le long d'une voie de circulation Vc1, Vc2, pour se déplacer en dehors des racks de stockage 2 jusqu'au moins un emplacement externe EE aux racks de stockage.

Le procédé peut présenter, pour une opération /CH/ de chargement d'une unité de stockage dans un emplacement de stockage dans le rack de stockage:

　　-- des opérations de transfert automatisé de l'unité de stockage U depuis ledit au moins un emplacement externe aux racks de stockage 2 jusqu'audit emplacement de transit ET sous un des racks de stockage, par le ou l'un des deuxièmes véhicules V2, puis,
　　-- des opérations de transfert automatisé de l'unité des stockage U depuis ledit au moins un emplacement de transit jusqu'au l'emplacement de stockage dans ledit rack de stockage 2, par le ou l'un des premiers véhicules V1.

Les opérations de transfert automatisé par le ou l'un des deuxièmes véhicules peuvent être effectuées par le déplacement longitudinal du ou de l'un des deuxièmes véhicules V2 circulant le long de la voie de circulation Vc1 ; Vc2 jusqu'au passage libre en dessous du rack de stockage, adjacent audit au moins un emplacement de transit ET, suivi, après un changement de direction du deuxième véhicule, par le déplacement longitudinal depuis le passage libre PL jusqu'audit emplacement de transit ET adjacent.

De manière générale, le premier véhicule 1 et le deuxième véhicule 2 sont des véhicules autoguidés comportant un module électronique de communication sans fil et recevant des instructions de guidage d'une unité centrale. Ladite unité centrale présente un ou plusieurs microprocesseurs, une mémoire et des instructions pour la construction des instructions de guidage.

Ladite unité centrale peut être distante et distincte des premiers et deuxièmes véhicules.

Les instructions de guidage assurent le déplacement des premiers véhicules V1, en particulier le déplacement suivant les allées ou d'une allée à l'autre via une avenue, ainsi que le déplacement du système de transfert ST, en hauteur, suivant la direction verticale Z, et l'opération du système de transfert ST pour le transfert de l'unité de stockage U depuis un emplacement de stockage et le premier véhicule V1.

Les instructions de guidage assurent le déplacement des deuxièmes véhicules V2, en particulier le déplacement des deuxièmes véhicules selon le déplacement transversal suivant la voie de circulation, suivi ou précédé du déplacement longitudinal entre le passage libre PL et l'emplacement de transit ET adjacent, s'agissant de l'action de retrait /RT/ ou l'opération de chargement /CH/.

De manière générale, le nombre $N_{ET}$ d'emplacements de transit ET suivant la longueur d'un rack de stockage peut être inférieur au nombre $N_U$ d'emplacements de stockage pour chaque niveau du rack suivant la direction longitudinale Y, et donc inférieur au nombre $N_U$ de colonnes.

Le nombre de passages libres peut correspond à la différence entre le nombre $N_U$ et le nombre d'emplacements de transit $N_{ET}$. Soit

$$N_{PL}= N_U-N_{ET}$$

Les emplacements de transit ET, et les passages libres PL peuvent être agencés suivant la longueur du rack de stockage 2 en alternance de sorte qu'au moins un passage libre PL soit associé adjacent, latéralement à chaque emplacement de transit ET.

De préférence tous les emplacements de transit ET sont accessibles par l'un au moins des deuxièmes véhicules V2, par le déplacement longitudinal entre ledit passage libre PL et ledit emplacement de transit ET.

Selon un mode de réalisation avantageux, tout ou partie des passages libres PL sont des passages doubles, adjacents à un même emplacement de transit ET, les passages doubles autorisant la circulation de deux deuxièmes véhicules V2, embarquant ou non chacun une unité de stockage U, respectivement suivant une première voie de circulation Vc1 et une deuxième voie de circulation Vc2, indépendantes, en des sens opposés transversalement au rack de stockage, les deux deuxièmes véhicules V2 susceptibles de se croiser au travers des passages libres PL, adjacents à un même emplacement de transit.

Disposer de deux voies de circulation, première voie de circulation Vc1 et deuxième voie de circulation Vc2, permet d'affecter des sens de circulation, opposés, respectivement aux deux voies de circulation, réduisant ainsi le risque d'embouteillage et de blocage des deuxièmes véhicules.

La présence des passages libres, doubles, permet la mise en oeuvre d'un procédé de chargement et de retrait pour lequel les passages libres PL adjacents audit emplacement de transit sont des passages doubles, comprenant pour le ou chaque emplacement de transit:

- des premiers passages libres PL de différents racks de stockage formant la première voie de circulation Vc1 pour les deuxièmes véhicules V2,
- de deuxièmes passages libres PL desdits différents racks de stockage, formant la deuxième voie de circulation Vc2 pour les deuxièmes véhicules V2.

Avantageusement, le procédé peut prévoir que les deuxièmes véhicules V2 circulent uniquement suivant un premier sens le long de la première voie de circulation Vc1, et les deuxièmes véhicules V2 circulent uniquement suivant un deuxième sens, opposé au premier sens, le long de la deuxième voie de circulation Vc2. Les voies étant indépendantes, la circulation des deuxièmes véhicules Vc2 selon la première voie de circulation Vc1 n'interfère pas avec la circulation des deuxièmes véhicules V2 suivant la deuxième voie de circulation Vc2.

D'une manière générale, la largeur de la première voie de circulation Vc1 suivant la direction longitudinale X du rack de stockage et la largeur de la deuxième voie de circulation Vc2 peuvent correspondre chacune à la largeur d'un emplacement de stockage.

D'une manière générale, ledit au moins un emplacement extérieur aux racks de stockage, encore appelé emplacement externe EE peut être dans une zone Zo faisant face aux racks des stockages, d'un côté des racks de stockage suivant la direction transversale Y, et comme illustré aux figures 1 et 2. Le ou les emplacements de transit sont accessibles pour les deuxièmes véhicules éventuellement chargés des unités de stockage, en empruntant l'une des voies de circulation adjacente à l'emplacement de transit ET à desservir.

Les deuxièmes véhicules V2 peuvent circuler depuis la zone Zo, externe au racks de stockage 2, jusqu'audit emplacement de transit en circulation sur la première voie de circulation Vc1, en circulant suivant le déplacement transversal dans le premier sens, puis changer de direction et accéder audit emplacement de transit ET, par déplacement longitudinal depuis la première voie de circulation Vc1 jusqu'audit emplacement de transit ET, en particulier en vue d'acheminer une unité de stockage lors du chargement /CH/, ou encore en vue de recevoir une unité de stockage lors du retrait /RT/.

Successivement au stationnement audit emplacement de transit ET, en particulier successivement au transfert de l'unité de stockage U jusqu'au système mécanique de stockage SMT, ou en encore au transfert de l'unité de stockage U vers le premier véhicule lors d'un chargement /CH/, le deuxième véhicule V2 peut se déplacer jusqu'à la deuxième voie de circulation Vc2, suivant le déplacement longitudinal, puis changer de direction, puis se déplacer en retour jusqu'à la zone Zo par déplacement transversal, suivant la deuxième voie de circulation Vc2 dans le second sens.

La première voie de circulation Vc1 et la deuxième voie de circulation Vc2 peuvent avantageusement desservir les différents emplacements de transit ET appartenant aux différents racks de stockage agencés en parallèle, adjacents par une circulation ordonnée des deuxièmes véhicules qui circulent dans le premier sens sur la première voie de circulation Vc1 et dans le deuxième sens sur la deuxième voie de circulation Vc2. Les sens uniques de circulation sur la première voie et sur la deuxième voie peuvent être inversés.

Selon une première variante, la première voie de circulation Vc1 et la deuxième voie de circulation Vc2 sont agencées adjacentes à un même emplacement de transit ET à desservir, d'un même côté dudit emplacement de transit ET, et comme illustré à la figure 1 ou 2, ce qui oblige lors du déplacement longitudinal depuis la deuxième voie Vc2 jusqu'à l'emplacement de transit ET à traverser la première voie de circulation Vc1.

Selon une deuxième variante, la première voie de circulation Vc1 et la deuxième voie de circulation Vc2 peuvent être agencées de part et d'autre de l'emplacement de transit ET à desservir. Comme illustré à la figure 2A, le deuxième véhicule V2 peut accéder audit emplacement de transit ET, par la première voie de circulation Vc1, notamment depuis la zone Zo, stationné audit emplacement de transit notamment pour les opérations de retrait ou de chargement, puis évacuer l'emplacement de transit, par la deuxième voie de circulation Vc2, et sans avoir à traverser la première voie Vc1, comparativement à la première variante.

Selon un mode de réalisation, illustré à la figure 1 ledit système de stockage mécanique SMT comprend un couple d'interfaces mécaniques IM comprenant une première interface mécanique IT1 et une deuxième interface mécanique IT2, parallèles entre elles, orientées longitudinalement chacune suivant la longueur du rack de stockage 2, à savoir selon la direction longitudinale Y.

De manière générale, le système mécanique de stockage SMT, en particulier les couples d'interfaces peuvent former des obstacles pour le déplacement des deuxièmes véhicules, transversalement au rack de stockage.

Dans la position de stationnement audit emplacement de transit ET, ledit deuxième véhicule V2 est agencé entre la première interface IT1 et la deuxième interface IT2 dans la position d'insertion.

De manière générale, le deuxième véhicule V2 peut comprendre un système de levage comprenant un plateau PT, identifié sur la figure 4, configuré pour passer d'une position basse de manière à autoriser un positionnement du deuxième véhicule en dessous d'une unité de stockage U en appui sur le système mécanique de stockage SMT jusqu'à une position haute pour laquelle le plateau soulève l'unité de stockage et dégage ladite unité de stockage U du système mécanique de stockage SMT.

De manière générale, les unités de stockage U peuvent présenter chacune une dimension en largeur, et une dimension en longueur supérieure à la dimension en largeur.

Les unités de stockage U sont stockées dans les emplacements de stockage, longitudinalement, suivant une dimension en profondeur du rack de stockage 2, transversale au rack de stockage 2, à savoir que les unités de stockage U sont orientées longitudinales suivant la direction transversale Y.

Le premier véhicule V1 peut alors être configuré pour transporter une des unités de stockage U depuis un emplacement de stockage en hauteur et jusqu'audit emplacement de transit, sans changer l'orientation de ladite unité de stockage U, en positionnant ladite unité de stockage U sur l'emplacement de transit ET, en particulier sur le système de stockage mécanique SMT, orientée longitudinalement, suivant la direction transversale du rack de stockage 2.

Lorsque le système de stockage mécanique SMT présente le couple d'interfaces mécaniques comprenant la première interface mécanique IT1 et la deuxième interface mécanique IT2, ladite unité de stockage U peut être orientée longitudinalement, suivant la direction transversale, en étant en appui respectivement sur la première interface IT1 et sur la deuxième interface IT2.

Le ou les deuxièmes véhicules V2 peuvent comprendre une dimension en longueur LV2 inférieure ou égale à la dimension en profondeur du rack de stockage 2, et une dimension en largeur, inférieure à la longueur du deuxième véhicule V2, inférieure à la dimension longitudinale d'un emplacement de stockage.

La première interface mécanique IT1 et la deuxième interface mécanique IT2 peuvent être espacées, suivant la direction transversale au rack de stockage suivant un espacement supérieur à la dimension en longueur LV2 d'un deuxième véhicule V2.

Le deuxième véhicule V2 peut être configuré pour changer de direction sans changer l'orientation de l'unité de stockage qu'il transporte.

Le deuxième véhicule V2 peut être d'orientation fixe, au cours des déplacements du deuxième véhicule, toujours orienté longitudinalement suivant la direction transversale X, en particulier lors du déplacement transversal sur la voie de circulation, notamment la première voie de circulation Vc1 ou sur la deuxième voie de circulation Vc2, et encore lors du déplacement longitudinal entre le passage libre PL et ledit emplacement de transit ET grâce au système de changement de direction SDV2 qui est configuré pour changer la direction d'avance du deuxième véhicule, sans changer l'orientation du châssis du véhicule.

En alternative, le deuxième véhicule V2 peut être configuré pour changer de direction en tournant autour d'un axe vertical, sans avancer substantiellement. Par exemple, le deuxième véhicule peut comprendre un mécanisme de rotation qui permet aux roues d'un côté du véhicule de tourner à une vitesse et/ou dans une direction différente de celles de l'autre côté.

Selon un mode de réalisation, les unités de stockage U peuvent être des contenus palettisés, comprenant chacun une palette. Les palettes peuvent être au format 1200 par 1000 (longueur et largeur en millimètres) par exemple une palette ISO, ou tout autre format connu de l'homme du métier tel que 1200 par 800 pour une palette au format euro. Les produits sur la palette peuvent être emballés directement sous une enveloppe formée par un enroulement de film plastique afin d'assurer leur maintien sur la palette, ou encore être contenus dans des emballages, typiquement des cartons, maintenus sur la palette par un enroulement de film plastique.

Selon une variante, les unités de stockage U peuvent être des palettes de réception comprenant un contenu déjà palettisé. Ainsi, même si des clients utilisent différents types de palettes, celles-ci peuvent être déposées sur des palettes de réception pour leur stockage dans l'installation.

Ces palettes de réception peuvent être au format 1200 par 1000 et être des palettes à tunnel ouvert, c'est-à-dire dont les côtés de la palette sont ouverts, formant un tunnel qui facilite l'insertion des fourches. Ces palettes de réception facilitent le chargement et déchargement de contenus palettisés au niveau des convoyeurs d'entrée et sortie décrits ci-après.

De manière générale, et en particulier lorsque les unités de stockage sont des contenus palettisés, une barrière périphérique BP peut former un enclos à accès limité contenant les racks de stockage 2, ainsi que les premiers véhicules V1 et les deuxièmes véhicules V2 circulant sur la surface horizontale SH, au niveau des racks de stockage, ou encore extérieurement aux racks de stockage. Notamment, l'enclos renferme en outre la zone Zo faisant face aux racks de stockage, y inclus les emplacements externes EE.

Selon un tel mode de réalisation, la barrière périphérique interdit l'accès aux opérateurs dans l'enclos.

Ladite installation peut comprendre :

- un convoyeur d'entrée CVE pour des unités de stockage, pour l'entrée d'unités de stockage jusqu'audit au moins un emplacement extérieur au rack de stockage, lesdites unités destinées à être transportées par les deuxièmes véhicules V2 jusqu'audit au moins un emplacement de transit ET, et en vue de leur chargement dans les emplacements de stockage du rack,
- un convoyeur de sortie CVS pour des unités de stockage pour la sortie d'unités de stockages retirées des emplacements de stockage du rack de stockage 2, acheminées par les deuxièmes véhicules V2 depuis ledit au moins un emplacement de transit ET jusqu'audit au moins un emplacement extérieur aux racks de stockage.

Selon une réalisation, lorsque ladite installation comprend une barrière périphérique, le convoyeur d'entrée CVE et le convoyeur de sortie CVS traversent chacun la barrière périphérique.

Le convoyeur d'entrée et de sortie peut comprendre un système de fourches déplaçables verticalement entre une position basse au niveau de la surface supérieure ou du plateau du deuxième véhicule et une position haute au niveau d'un système de convoyage.

En variante, le convoyeur d'entrée et de sortie peut comprendre un système de convoyage dont l'extrémité comprend une interface pour recevoir un contenu palettisé.

Selon un mode de réalisation (non illustré), ladite installation de stockage et de retrait peut être une installation de préparation de commandes, lesdites unités de stockage comprenant des conteneurs, tels que des bacs, contenant des produits.

Une telle installation de préparation de commandes comprend une ou plusieurs stations de préparation de commande, manuelles ou robotisées.

Lors d'un retrait /RT/, une unité de stockage peut être acheminée par le premier véhicule jusqu'audit emplacement de transit, puis par le deuxième véhicule depuis ledit emplacement de transit jusqu'audit emplacement externe au niveau de la station de préparation de commande pour permettre des opérations de collecte par un opérateur, ou par un bras robotisé.

Les produits collectés dans une ou plusieurs unités de stockage U sont transférés dans un carton de commande. Une fois les opérations de collecte effectuées, l'unité de stockage U peut être retournée par une opération de chargement /CH/ par le deuxième véhicule V2 jusqu'audit emplacement de transit ET, puis par le premier véhicule V1 depuis ledit emplacement de transit ET jusqu'à un emplacement de stockage dans un des racks de stockage.

De manière générale, et selon le procédé de stockage et de retrait selon un premier aspect pour lequel ledit emplacement de transit est pourvu de système mécanique de stockage :

- lors du retrait selon /RT/ ledit au moins un premier véhicule V1 transfert l'unité de stockage U depuis l'emplacement de stockage du rack de stockage jusqu'audit au moins un emplacement de transit ET sous le rack de stockage, en déposant l'unité de stockage sur le système mécanique de stockage SMT, à distance de la surface horizontale,
- lors du chargement selon /CH/, l'unité de stockage est stockée sur l'emplacement de transit ET à distance de la surface horizontale SH par le système mécanique de stockage SMT, lorsque ledit au moins un premier véhicule V1 transfert l'unité de stockage depuis ledit emplacement transit.

Ledit procédé peut comprendre, pour le retrait d'une unité de stockage dans un emplacement de stockage d'un des racks de stockage selon /RT/:

/A1/ déplacer le ou un des premiers véhicules V1 le long d'une des allées 3, au droit d'une colonne comportant ladite unité de stockage U, et déplacer le système de transfert ST verticalement suivant la hauteur du mat, jusqu'à la hauteur de l'emplacement de stockage de ladite unité de stockage,

/B1/ transférer ladite unité de stockage U depuis l'emplacement de stockage jusqu'au premier véhicule V1, en particulier par un déploiement puis une rétractation du bras télescopique,

/C1/ descendre le système de transfert ST embarquant l'unité de stockage et déposer ladite unité de stockage sur ledit au moins un système mécanique de stockage SMT sous le rack de stockage en particulier par un déploiement du bras télescopique,

/D1/ déplacer un des deuxièmes véhicules V2 jusqu'aux racks de stockage,

/E1/ déplacer ledit deuxième véhicule V2 au moins transversalement au rack de stockage le long de la voie de circulation en particulier le long de la première voie de circulation Vc1 jusqu'à un des passages libres PL adjacent au système mécanique de stockage SMT soutenant ladite unité de stockage U, le deuxième véhicule V2 agencé sous ledit rack de stockage 2,

/F1/ changer la direction de déplacement du véhicule V2 et déplacer le deuxième véhicule V2 longitudinalement au rack de stockage jusqu'à une insertion du deuxième véhicule sous ladite unité de stockage U en appui sur le système mécanique de stockage SMT, dans la position basse du plateau PT,

/G1/ monter la plateau PT dans la position haute jusqu'à soulever ladite unité de stockage par rapport au système mécanique de stockage SMT,

/H1/ déplacer conjointement le deuxième véhicule V2 et l'unité de stockage U embarquée sur le plateau PT longitudinalement au rack de stockage jusqu'au passage libre PL sous le rack de stockage,

/I1/ changer la direction de déplacement du deuxième véhicule V2 et déplacer conjointement le deuxième véhicule V2 et l'unité de stockage U embarqué sur le plateau, transversalement au rack de stockage 2 selon la voie de circulation, en particulier sur la deuxième voie de circulation Vc2, en dehors des racks de stockage 2.

De manière générale, ledit procédé peut comprendre pour le chargement d'une unité de stockage dans un emplacement de stockage d'un des racks de stockage selon /CH/:

/A2/ déplacer un deuxième véhicule V2 embarquant une unité de stockage U sur son plateau PT, jusqu'aux racks de stockage 2,

/B2/ déplacer ledit deuxième véhicule V2, au moins transversalement au rack de stockage le long de la voie de circulation en particulier la première voie de circulation, jusqu'à un des passages libres PL adjacent à un système mécanique de stockage SMT, libre d'unité de stockage,

/C2/ changer la direction de déplacement du deuxième véhicule V2 et déplacer le véhicule longitudinalement au rack de stockage jusqu'à une insertion du deuxième véhicule V2 au travers du système mécanique de stockage SMT, dans la position haute du plateau soutenant ladite unité de stockage,

/D2/ descendre le plateau PT jusqu'à la position basse et déposer ladite unité de stockage U sur ledit système mécanique de stockage SMT,

/E2/ déplacer un des premiers véhicules V1 le long d'une allée 3, et déplacer le système de transfert ST verticalement suivant la hauteur du mat, jusqu'à la hauteur de ladite unité de stockage soutenue par système mécanique de stockage SMT

/F2/ transférer ladite unité de stockage U en appui sur le système mécanique de stockage SMT jusqu'au premier véhicule V1, en particulier par un déploiement puis une rétractation du bras télescopique

/G2/ monter le système de transfert ST embarquant l'unité de stockage U et déposer ladite unité de stockage dans l'un des emplacements de stockage du rack de stockage V2 par le système de transfert en particulier par un déploiement du bras télescopique.

De manière générale, une unité de contrôle, en particulier ladite unité centrale, peut comprendre un ou plusieurs microprocesseurs, une mémoire et un jeu d'instructions configurées pour coopérer le ou les microprocesseurs pour mettre en oeuvre :

- les actions /A1/, /B1/, /C1/, /D1/, /E1/, /F1/, /G1/, /H1/, /I1/ selon le retrait /RT/ et
- les actions /A2/, /B2/, /C2/, /D2/, /E2/, /F2/, /G2/ selon le chargement /CH/.

Avantageusement, à la fin de l'étape /D2/ d'un chargement /CH/, lorsque le deuxième véhicule V2 est en position d'insertion au travers du système mécanique de stockage SMT, avec le plateau en position basse, ce deuxième véhicule V2 reste stationné à cet emplacement, en attente d'une autre unité de stockage déposée sur ledit système mécanique de stockage selon l'étape /C1/ d'un retrait /RT/. Ceci permet d'optimiser les déplacements du deuxième véhicule V2.

De manière générale, et selon le procédé de stockage et de retrait selon un deuxième aspect pour lequel ledit emplacement de transit est dépourvu de système mécanique de stockage:

- lors du retrait selon /RT/ ledit au moins un premier véhicule V1 transfert l'unité de stockage U depuis l'emplacement de stockage du rack de stockage jusqu'audit au moins un emplacement de transit ET sous le rack de stockage, en déposant l'unité de stockage sur le deuxième véhicule V2 stationné sur ledit au moins un emplacement de transit ET;
- lors du chargement selon /CH/, ledit au moins un deuxième véhicule V2 embarquant l'unité de stockage est stationné audit au moins un emplacement de transit ET, lorsque ledit au premier véhicule V1 transfert l'unité de stockage depuis ledit emplacement transit (ET) jusqu'audit emplacement de stockage.

En particulier, ledit procédé peut comprendre, pour le retrait d'une unité de stockage dans un emplacement de stockage d'un des racks de stockage selon /RT/ :

/A3/ déplacer le ou un des premiers véhicules V1 le long d'une des allées 3, au droit d'une colonne comportant ladite unité de stockage U, et déplacer le système de transfert ST verticalement suivant la hauteur du mat, jusqu'à la hauteur de l'emplacement de stockage de ladite unité de stockage,

/B3/ transférer ladite unité de stockage U depuis l'emplacement de stockage jusqu'au premier véhicule V1 notamment par déploiement puis rétraction du bras télescopique,

/C3/ descendre le système de transfert ST embarquant l'unité de stockage et déposer ladite unité de stockage sur au moins un deuxième véhicule V2 stationné sur ledit au moins un emplacement de transit ET, notamment par déploiement puis rétractation du bras télescopique,

/D3/ déplacer conjointement le deuxième véhicule V2 et l'unité de stockage U embarquée au véhicule, longitudinalement au rack jusqu'au passage libre PL sous le rack de stockage, adjacent audit emplacement de transit ET,

/E3/ changer la direction de déplacement du deuxième véhicule V2 et déplacer conjointement le deuxième véhicule et l'unité de stockage U embarquée au véhicule, transversalement au rack de stockage 2 le long de la voie de circulation en dehors des racks de stockage 2.

En particulier, ledit procédé peut comprendre pour le chargement d'une unité de stockage dans un emplacement de stockage d'un des racks de stockage selon /CH/:

/A4/ déplacer un deuxième véhicule V2 embarquant une unité de stockage U, jusqu'aux racks de stockage,

/B4/ déplacer ledit deuxième véhicule V2, au moins transversalement au rack de stockage le long de la voie de circulation, en particulier la première voie de circulation Vc1, jusqu'à un des passages libres PL adjacent à l'emplacement de transit ET libre d'unité de stockage,

/C4/ changer la direction de déplacement du deuxième véhicule V2 et déplacer le deuxième véhicule V2 longitudinalement au rack de stockage jusqu'au stationnement du deuxième véhicule V2 embarquant l'unité de stockage sur ledit emplacement de transit ET,

/D4/ déplacer un des premiers véhicules V1 le long d'une allée, et déplacer le système de transfert ST verticalement suivant la hauteur du mât, jusqu'à la hauteur de ladite unité de stockage soutenue par le deuxième véhicule V2 stationné audit emplacement de transit ET

/E4/ transférer ladite unité de stockage U en appui sur le deuxième véhicule V2 jusqu'au premier véhicule V1, en particulier par le système de transfert ST, par déploiement puis rétractation du bras télescopique,

/F4/ monter le système de transfert embarquant l'unité de stockage et déposer ladite unité de stockage dans l'un des emplacements de stockage du rack de stockage 2, notamment par déploiement puis rétractation du bras télescopique.

De manière générale, une unité de contrôle, en particulier ladite unité centrale, peut comprendre un ou plusieurs microprocesseurs, une mémoire et un jeu d'instructions configurées pour coopérer le ou les microprocesseurs pour mettre en oeuvre :

- les actions /A3/, /B3/, /C3/, /D3/ /E3/ selon le retrait /RT/,
- les actions /A4/, /B4/, /C4/, /D4/ /E4/ /F4/ selon le chargement /CH/.

Avantageusement, à la fin de l'étape /E4/ du chargement /CH/, lorsqu'un deuxième véhicule V2 est déchargé de l'unité de stockage U, ce deuxième véhicule reste stationné sur l'emplacement de transit ET, en attente d'une autre unité de stockage selon l'étape /C3/ d'un retrait /RT/. Ceci permet d'optimiser les déplacements du deuxième véhicule V2.

**Liste des signes de référence**

1. Installation de stockage et de retrait

2. Racks de stockage

20. Montants

21. Traverses

3. Allées entre les racks de stockage.

30. Courroie,

AI1. Premières allées

AI2. Deuxièmes allées

Av. avenue

BP. barrière périphérique

c1, c2, c3. Colonnes réparties suivant la longueur du rack de stockage (notamment première deuxième et troisième).

EE. Emplacement externe (aux racks de stockage)

ET. Emplacement de transit,

IM - Couple d'interfaces mécaniques,

IT1, IT2. Première et deuxième interfaces mécaniques.

LV2. Dimension en longueur des deuxièmes véhicules.

MO. Moteur

Mt. Mât des premiers véhicules.

Mt1, Mt2. Premier et deuxième mât,

Pl. Poulies

PL - Passages libres.

PR. Position rétractée (du système de transfert des premiers véhicules)

PT. Plateau du deuxième véhicule

SDV2. Système de changement de direction du deuxième véhicule

SEV2. Système d'entrainement horizontal du deuxième véhicule

SG1, SG2, SG3. Respectivement premier segment, deuxième segment, troisième segment (bras télescopique du système de transfert),

SH. surface horizontale

SMT. Système mécanique de stockage (sous racks)

ST. Système télescopique des premiers véhicules

U. Unités de stockage.

V1. Premiers véhicules à guidage automatique.

V2. Deuxièmes véhicules à guidage automatique

Vc. Voies de circulation.

Vc1. Première voie de circulation.

Vc2. Deuxième voie de circulation.

Zo. Zone faisant face au rack de stockage de circulation des deuxièmes véhicules.

**Revendications**

1. Installation de stockage et de retrait (1) pour unités de stockage (U) comprenant :

    /a/ une pluralité de racks de stockage (2), espacés les uns par rapport aux autres en formant des allées (3), chaque rack de stockage (2) comprenant une pluralité d'emplacements de stockage superposés soutenant ou pour le soutien des unités de stockage (U), en hauteur par rapport à une surface horizontale (SH), telle que le sol, les unités de stockage (U) étant en particulier des contenus palettisés comprenant chacun une palette,

    /b/ au moins un emplacement de transit (ET) agencé sous au moins l'un des racks de stockage (2) pour recevoir temporairement une unité de stockage (U),

    /c/ au moins un premier véhicule (V1) configuré pour circuler dans les allées (3) et transporter une unité de stockage (U) entre un emplacement de stockage en hauteur et ledit au moins un emplacement de transit (ET),

    /d/ au moins un deuxième véhicule (V2) configuré pour transporter une unité de stockage (U) entre ledit au moins un emplacement de transit (ET) et au moins un emplacement externe (EE) aux racks de stockage

    /e/ au moins un passage libre (PL) sous lesdits racks de stockage, adjacent audit emplacement de transit (ET), configuré pour permettre la circulation dudit au moins un deuxième véhicule (V2) selon une voie de circulation (Vc1 ; Vc2) transversale aux allées (3)

et dans laquelle le deuxième véhicule est configuré pour transporter une unité de stockage entre ledit au moins un emplacement de transit (ET) et ledit au moins un emplacement externe (EE) extérieur aux racks de stockage en mettant en oeuvre :

    - au moins un déplacement transversal du deuxième véhicule (V2) selon la voie de circulation (Vc1 ; Vc2), suivi ou précédé par
    - un déplacement longitudinal du deuxième véhicule (V2) entre le passage libre (PL) et ledit au moins une emplacement de transit (ET) adjacent, en dessous d'un des racks de stockage, suivant une direction de déplacement longitudinale audit rack de stockage.

2. Installation de stockage et de retrait (1) pour unités de stockage (U) selon la revendication 1, dans laquelle le premier véhicule (V1) est configuré pour transporter ladite unité de stockage (U) entre ledit emplacement de stockage en hauteur et jusqu'à en appui sur une surface supérieure d'au moins un deuxième véhicule (V2) stationné sur l'emplacement de transit (ET).

3. Installation de stockage et de retrait (1) pour unités de stockage (U) selon la revendication 1, dans laquelle ledit emplacement de transit (ET) comprend un système mécanique de stockage (SMT) configuré pour soutenir temporairement une unité de stockage à distance de la surface horizontale (SH), et dans lequel un déplacement longitudinal du deuxième véhicule (V2) depuis le passage libre (PL) jusqu'audit emplacement de transit (ET) adjacent assure une position d'insertion du deuxième véhicule sous ladite unité de stockage (U) soutenue par le système mécanique de stockage (SMT).

4. Installation de stockage et de retrait (1) pour unités de stockage (U) selon la revendication 3 dans laquelle ledit système de stockage mécanique (SMT) comprend un couple d'interfaces mécaniques (IM) comprenant une première interface mécanique (IT1) et une deuxième interface mécanique (IT2), parallèles entre elles, orientées longitudinalement chacune suivant la longueur du rack de stockage (2), et dans laquelle ledit deuxième véhicule (V2) est agencé entre la première interface (IT1) et la deuxième interface (IT2) dans la position d'insertion.

5. Installation de stockage et de retrait (1) pour unités de stockage (U) selon la revendication 3 ou 4 dans laquelle le deuxième véhicule (V2) comprend un système de levage comprenant un plateau (PT) configuré pour passer d'une position basse de manière à autoriser un positionnement du deuxième véhicule en dessous d'une unité de stockage (U) en appui sur le système mécanique de stockage (SMT) jusqu'à une position haute pour laquelle le plateau soulève l'unité de stockage et dégage ladite unité de stockage (U) du système mécanique de stockage (SMT).

6. Installation de stockage et de retrait (1) pour unités de stockage (U) selon l'une des revendications 1 à 5 comprenant les unités de stockage (U) qui présentent, chacune une dimension en largeur, et une dimension en longueur supérieure à la dimension en largeur, et dans laquelle

   - les unités de stockage (U) sont stockées dans les emplacements de stockage, longitudinalement, suivant une dimension en profondeur du rack de stockage (2), transversale au rack de stockage (2), et
   - le premier véhicule (V1) est configuré pour transporter une des unités de stockage (U) depuis un emplacement de stockage en hauteur et jusqu'à un emplacement de transit (ET), sans changer l'orientation de ladite unité de stockage (U), en positionnant ladite unité de stockage (U) sur l'emplacement de transit (ET), orientée longitudinalement, suivant la direction transversale du rack de stockage (2).

7. Installation de stockage et de retrait (1) pour unités de stockage (U) selon l'une des revendications 1 à 6, dans laquelle le ou chaque rack de stockage (2) comprend plusieurs colonnes réparties suivant la direction en longueur du rack de stockage, chaque colonne comprenant une pluralité d'emplacements de stockage superposés pour recevoir respectivement une pluralité d'unités de stockage, et dans laquelle le ou les deuxièmes véhicules (V2) comprennent une dimension en longueur (LV2) inférieure ou égale à la dimension en profondeur du rack de stockage (2), et une dimension en largeur, inférieure à la longueur du deuxième véhicule (V2), inférieure à la dimension longitudinale d'un emplacement de stockage.

8. Installation de stockage et de retrait selon l'une des revendications 1 à 7 dans laquelle tout ou partie des passages libres (PL), sont des passages doubles, adjacents à un même emplacement de transit (ET), les passages doubles autorisant la circulation de deux deuxièmes véhicules (V2), embarquant ou non chacun une unité de stockage (U), respectivement suivant une première voie de circulation (Vc1) et une deuxième voie de circulation (Vc2), indépendantes, en des sens opposés transversalement au rack de stockage, les deux deuxièmes véhicules (V2) susceptibles de se croiser au travers des passages libres (PL), adjacents à un même emplacement de transit.

9. Installation de stockage selon l'une des revendications 1 à 8 dans laquelle les emplacements de transit (ET) et les passages libres (PL) sont agencés suivant la longueur du rack de stockage (2) en alternance de sorte qu'au moins un passage libre (PL) soit associé adjacent, latéralement à chaque emplacement de transit (ET).

10. Installation de stockage et de retrait selon l'une des revendications 1 à 9, dans laquelle le ou chaque deuxième véhicule (V2) comprend un système d'entrainement horizontal (SEV2) configuré pour assurer le déplacement sur la surface horizontale, et pour déplacer sélectivement le deuxième véhicule (V2), suivant une première direction parallèle à la direction longitudinale des racks de stockage (2), ou suivant une direction transversale à la direction longitudinale du rack, ainsi qu'un système de changement de direction (SDV2) de la première direction à la deuxième direction ou inversement, sans changer l'orientation du véhicule.

11. Installation selon l'une des revendications 1 à 10, dans laquelle le ou les premiers véhiculent (V1), comprennent en tout ou partie :

   -- un système d'entrainement horizontal configuré pour déplacer le véhicule sur la surface horizontale,
   - au moins un mât (Mt), et
   - un système de transfert (ST), déplaçable verticalement le long du mât configuré pour transférer une unité de stockage entre le premier véhicule et un des emplacements de stockage.

**12.** Installation de stockage et de retrait selon l'une des revendications 1 à 11, dans laquelle une barrière périphérique (BP) forme un enclos à accès limité contenant les racks de stockage (2), ainsi que les premiers véhicules (V1) et les deuxièmes véhicules (V2) circulant sur la surface horizontale (SR), ladite installation comprenant en outre :

- un convoyeur d'entrée (CVE) pour des unités de stockage, traversant la barrière périphérique (BP) pour l'entrée d'unités de stockage jusqu'audit au moins un emplacement extérieur au rack de stockage, lesdites unités destinées à être transportées par les deuxièmes véhicules (V2) jusqu'audit au moins un emplacement de transit (ET), et en vue de leur chargement dans les emplacements de stockage du rack,

- un convoyeur de sortie (CVS) pour des unités de stockage, traversant la barrière périphérique, pour la sortie d'unités de stockages retirées des emplacements de stockage du rack de stockage (2), acheminée par les deuxièmes véhicules (V2) depuis ledit au moins un emplacement de transit (ET) jusqu'audit au moins un emplacement extérieur aux racks de stockage.

**13.** Procédé de chargement et de retrait mettant en oeuvre une installation de stockage et de retrait (1) selon l'une des revendications 1 à 12, dans lequel :

- /RT/ un retrait d'une unité de stockage (U) depuis un emplacement de stockage de l'un des racks de stockage est effectué par :

-- des opérations de transfert automatisé de l'unité de stockage (U) depuis l'emplacement de stockage du rack de stockage jusqu'audit au moins un emplacement de transit (ET) sous le rack de stockage (2), par le ou l'un des premiers véhicules (V1) puis par :

-- des opérations de transfert automatisé de l'unité de stockage (U) par le ou l'un des deuxièmes véhicules (V2) depuis ledit au moins un emplacement de transit (ET) jusqu'au moins un emplacement externe (EE) extérieur aux racks de stockage, et/ou

- /CH/ un chargement d'une unité de stockage dans un emplacement de stockage dans le rack de stockage est opéré par :

-- des opérations de transfert automatisé de l'unité de stockage (U) depuis ledit au moins un emplacement externe (EE), extérieur aux racks de stockage (2) jusqu'audit emplacement de transit

(ET), sous un des racks de stockage, par le ou l'un des deuxièmes véhicules V2, puis par,

-- des opérations de transfert automatisé de l'unité de stockage (U) depuis ledit au moins un emplacement de transit jusqu'au l'emplacement de stockage dans ledit rack de stockage (2), par le ou l'un des premiers véhicules (V1)

et dans lequel :

- lors du retrait selon /RT/, les opérations de transfert automatisé par le ou l'un des deuxièmes véhicules sont effectuées par le ou l'un des deuxièmes véhicules (V2) circulant au moins selon ledit déplacement longitudinal, depuis ledit au moins un emplacement de transit (ET) jusqu'au passage libre adjacent, suivi, après un changement de direction du deuxième véhicule (V2), du déplacement transversal du deuxième véhicule au travers du passage libre (PL) le long de la voie de circulation (Vc1, Vc2), pour se déplacer en dehors des racks de stockage (2) jusqu'au moins un emplacement externe (EE) aux racks de stockage.

- lors du chargement selon /CH/, les opérations de transfert automatisé par le ou l'un des deuxièmes véhicules sont effectuées par le ou l'un des deuxièmes véhicules circulant le long de la voie de circulation (Vc1 ; Vc2) jusqu'au passage libre en dessous du rack de stockage, adjacent audit au moins un emplacement de transit (ET), suivi, après un changement de direction du deuxième véhicule, par le déplacement longitudinal depuis le passage libre (PL) jusqu'audit emplacement de transit (ET) adjacent.

**14.** Procédé de chargement et de retrait selon la revendication 13 mettant en œuvre une installation selon la revendication 2, dans lequel :

- lors du retrait selon /RT/ ledit au moins un premier véhicule (V1) transfert l'unité de stockage (U) depuis l'emplacement de stockage du rack de stockage jusqu'audit au moins un emplacement de transit (ET) sous le rack de stockage, en déposant l'unité de stockage sur le deuxième véhicule (V2) stationné sur ledit au moins un emplacement de transit (ET) ;

- lors du chargement selon /CH/, ledit au moins un deuxième véhicule (V2) embarquant l'unité de stockage, est stationné audit au moins un emplacement de transit (ET), lorsque ledit au premier véhicule (V1) transfert l'unité de stockage depuis ledit emplacement transit (ET) jusqu'audit emplacement de stockage.

**15.** Procédé de chargement et de retrait selon la revendication 13 mettant en œuvre une installation selon l'une des revendications 3 à 5, dans lequel :

- lors du retrait selon /RT/ ledit au moins un premier véhicule (V1) transfert l'unité de stockage (U) depuis l'emplacement de stockage du rack de stockage jusqu'audit au moins un emplacement de transit (ET) sous le rack de stockage, en déposant l'unité de stockage sur le système mécanique de stockage (SMT), à distance de la surface horizontale,
- lors du chargement selon /CH/, l'unité de stockage est stockée sur l'emplacement de transit (ET) à distance de la surface horizontale (SH) par le système mécanique de stockage (SMT), lorsque ledit au premier véhicule (V1) transfert l'unité de stockage depuis ledit emplacement transit.

**16.** Installation de stockage et de retrait selon l'une des revendications 1 à 12, comprenant une unité de contrôle, en particulier une unité centrale, comprenant un ou plusieurs microprocesseurs, une mémoire et un jeu d'instructions configurées pour coopérer le ou les microprocesseurs pour mettre en œuvre le procédé de chargement et de retrait selon l'une des revendications 13 à 15.

[Fig. 1]

FIG. 1

[Fig. 2]

EP 4 763 747 A1

**FIG. 2**

ET ; SMT ; IM

IT1

Vc1

IT2

Vc2

## FIG. 2A

[Fig. 3]

ET ; SMT ; IM

PL

IT2

LV2

ET

IT1

ET

## FIG. 3

[Fig. 4]

**FIG. 4**

[Fig. 5]

**FIG. 5**

[Fig. 6]

**FIG. 6**

[Fig. 7]

29

**FIG. 7**

[Fig. 7A]

29

SEV2,
SDV2

34

31

210

32

34

34

# FIG. 7A

[Fig. 8]

FIG. 8

FIG. 9

[Fig. 10]

FIG. 10

| | Europäisches Patentamt / European Patent Office / Office européen des brevets | **RAPPORT DE RECHERCHE EUROPEENNE** | Numéro de la demande<br>EP 25 22 1400 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 4 152 229 A1 (BEIJING GEEKPLUS TECH CO LTD [CN]) 22 mars 2023 (2023-03-22) | 1-7,9, 11,12, 14-16 | INV.<br>B65G1/04<br>B65G1/10 |
| Y | * alinéa [0096] - alinéa [0177]; | 10 | |
| A | revendications; figures * | 8 | |
| | ----- | | |
| A | CN 111 361 908 B (SHANGHAI QUICKTRON INTELLIGENT SCIENCE & TECH CO LTD) 15 octobre 2021 (2021-10-15)<br>* alinéa [0119] - alinéa [0167]; revendications; figures * | 1-16 | |
| | ----- | | |
| A | EP 4 219 343 A1 (SHANGHAI QUICKTRON INTELLIGENT TECH CO LTD [CN]) 2 août 2023 (2023-08-02)<br>* alinéa [0058] - alinéa [0080]; revendications; figures * | 1-16 | |
| | ----- | | |
| Y | CN 117 985 390 A (DEMATIC PTY LTD) 7 mai 2024 (2024-05-07)<br>* figure 5A * | 10 | |
| | ----- | | |

**DOMAINES TECHNIQUES RECHERCHES (IPC)**

B65G

Le présent rapport a été établi pour toutes les revendications

| Lieu de la recherche | Date d'achèvement de la recherche | Examinateur |
|---|---|---|
| La Haye | 15 avril 2026 | Hoffert, Rudi |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P04C02)

EP 4 763 747 A1

## ANNEXE AU RAPPORT DE RECHERCHE EUROPEENNE
## RELATIF A LA DEMANDE DE BREVET EUROPEEN NO.

EP 25 22 1400

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-04-2026

| Document brevet cité au rapport de recherche | | Date de publication | Membre(s) de la famille de brevet(s) | | Date de publication |
|---|---|---|---|---|---|
| EP 4152229 | A1 | 22-03-2023 | EP | 4152229 A1 | 22-03-2023 |
| | | | JP | 7538251 B2 | 21-08-2024 |
| | | | JP | 2023525729 A | 19-06-2023 |
| | | | US | 2023206174 A1 | 29-06-2023 |
| | | | US | 2025225481 A1 | 10-07-2025 |
| | | | WO | 2021228158 A1 | 18-11-2021 |
| CN 111361908 | B | 15-10-2021 | AUCUN | | |
| EP 4219343 | A1 | 02-08-2023 | AU | 2021346619 A1 | 18-05-2023 |
| | | | EP | 4219343 A1 | 02-08-2023 |
| | | | JP | 7557057 B2 | 26-09-2024 |
| | | | JP | 2023543272 A | 13-10-2023 |
| | | | KR | 20230062634 A | 09-05-2023 |
| | | | US | 2023227260 A1 | 20-07-2023 |
| | | | WO | 2022062826 A1 | 31-03-2022 |
| CN 117985390 | A | 07-05-2024 | CN | 117985390 A | 07-05-2024 |
| | | | EP | 4365108 A1 | 08-05-2024 |
| | | | WO | 2024094734 A1 | 10-05-2024 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2023159401 A
- US 20160090283 A1
- US 20170101264 A

- WO 2024091954 A1
- EP 4373690 A
- FR 3148017 A1